(19) Europäisches Patentamt
European Patent Office
Office européen des brevets

(11) **EP 4 708 206 A1**

(12) **EUROPEAN PATENT APPLICATION**
published in accordance with Art. 153(4) EPC

(43) Date of publication:
**11.03.2026 Bulletin 2026/11**

(21) Application number: **24830829.8**

(22) Date of filing: **26.06.2024**

(51) International Patent Classification (IPC):
**G06T 17/00** (2006.01)

(86) International application number:
**PCT/CN2024/101717**

(87) International publication number:
**WO 2025/002194 (02.01.2025 Gazette 2025/01)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **30.06.2023 CN 202310806421**

(71) Applicant: **Beijing Horizon Information
Technology Co., Ltd.
Beijing 100094 (CN)**

(72) Inventors:
• **SUI, Wei
Beijing 100094 (CN)**
• **ZHANG, Jiaxin
Beijing 100094 (CN)**
• **ZHANG, Qian
Beijing 100094 (CN)**

(74) Representative: **Dehns Germany Partnerschaft
mbB
Theresienstraße 6-8
80333 München (DE)**

(54) **SCENE RECONSTRUCTION METHOD AND APPARATUS, AND STORAGE MEDIUM AND ELECTRONIC DEVICE**

(57) Disclosed in the embodiments of the present disclosure are a scene reconstruction method and apparatus, a storage medium, and an electronic device. The method includes: performing background segmentation on a first image sequence captured by a camera provided on a mobile device, to obtain a second image sequence; performing point-cloud sparse reconstruction by using the second image sequence, to obtain a first reconstructed point cloud and a first camera-pose sequence of the camera; performing dynamic-static segmentation on the first image sequence to obtain a third image sequence corresponding to a static scene and a fourth image sequence corresponding to a dynamic scene; performing point-cloud dense reconstruction by using the first reconstructed point cloud, the first camera-pose sequence, and the third image sequence, to obtain a second reconstructed point cloud; sequentially performing point-cloud sparse reconstruction and dense reconstruction by using the first camera-pose sequence and the fourth image sequence, to obtain a third reconstructed point cloud; and determining, based on the second reconstructed point cloud and the third reconstructed point cloud, a scene reconstruction result corresponding to the first image sequence.

performing background segmentation on a first image sequence captured by a camera provided on a mobile device, to obtain a second image sequence — 210

performing point-cloud sparse reconstruction by using the second image sequence, to obtain a first reconstructed point cloud and a first camera-pose sequence of the camera — 220

performing dynamic-static segmentation on the first image sequence to obtain a third image sequence corresponding to a static scene and a fourth image sequence corresponding to a dynamic scene — 230

performing point-cloud dense reconstruction by using the first reconstructed point cloud, the first camera-pose sequence, and the third image sequence, to obtain a second reconstructed point cloud — 240

sequentially performing point-cloud sparse reconstruction and dense reconstruction by using the first camera-pose sequence and the fourth image sequence, to obtain a third reconstructed point cloud — 250

determining, based on the second reconstructed point cloud and the third reconstructed point cloud, a scene reconstruction result corresponding to the first image sequence — 260

**FIG. 2**

EP 4 708 206 A1

**Description**

**CROSS-REFERENCE TO RELATED APPLICATION**

The present disclosure claims priority to Chinese Patent Application No. CN202310806421.2, entitled "SCENE RECONSTRUCTION METHOD AND APPARATUS, STORAGE MEDIUM, AND ELECTRONIC DEVICE" and filed with the China National Intellectual Property Administration on June 30, 2023, which is incorporated herein by reference in its entirety.

**TECHNICAL FIELD**

The present disclosure relates to driving technologies, and in particular, to a scene reconstruction method and apparatus, a storage medium, and an electronic device.

**BACKGROUND**

In some cases, scene reconstruction is required. For example, for outdoor scenes for unmanned driving, scene reconstruction needs to be performed. A scene reconstruction result is of great value for scene reproduction and data annotation. At present, the implementation of scene reconstruction typically relies on lidar.

**SUMMARY**

At present, scene reconstruction needs to rely on lidar, resulting in high implementation costs.
To resolve the above technical problem, the present disclosure provides a scene reconstruction method and apparatus, a medium, and an electronic device, which may reduce implementation costs of scene reconstruction.
According to one aspect of embodiments of the present disclosure, there is provided a scene reconstruction method, including:
performing background segmentation on a first image sequence captured by a camera provided on a mobile device, to obtain a second image sequence; performing point-cloud sparse reconstruction by using the second image sequence, to obtain a first reconstructed point cloud and a first camera-pose sequence of the camera; performing dynamic-static segmentation on the first image sequence to obtain a third image sequence corresponding to a static scene and a fourth image sequence corresponding to a dynamic scene; performing point-cloud dense reconstruction by using the first reconstructed point cloud, the first camera-pose sequence, and the third image sequence, to obtain a second reconstructed point cloud; sequentially performing point-cloud sparse reconstruction and dense reconstruction by using the first camera-pose sequence and the fourth image sequence, to obtain a third reconstructed point cloud; and determining, based on the second reconstructed point cloud and the third reconstructed point cloud, a scene reconstruction result corresponding to the first image sequence.
According to another aspect of embodiments of the present disclosure, there is provided a scene reconstruction apparatus, including:
a first segmentation module, configured for performing background segmentation on a first image sequence captured by a camera provided on a mobile device, to obtain a second image sequence; a first reconstruction module, configured for performing point-cloud sparse reconstruction by using the second image sequence obtained by the first segmentation module, to obtain a first reconstructed point cloud and a first camera-pose sequence; a second segmentation module, configured for performing dynamic-static segmentation on the first image sequence to obtain a third image sequence corresponding to a static scene and a fourth image sequence corresponding to a dynamic scene; a second reconstruction module, configured for performing point-cloud dense reconstruction by using the first reconstructed point cloud and the first camera-pose sequence that are obtained by the first reconstruction module and the third image sequence obtained by the second segmentation module, to obtain a second reconstructed point cloud; a third reconstruction module, configured for sequentially performing point-cloud sparse reconstruction and dense reconstruction by using the first camera-pose sequence obtained by the first reconstruction module and the fourth image sequence obtained by the second segmentation module, to obtain a third reconstructed point cloud; and a determination module, configured for determining, based on the second reconstructed point cloud obtained by the second reconstruction module and the third reconstructed point cloud obtained by the third reconstruction module, a scene reconstruction result corresponding to the first image sequence.
According to still another aspect of embodiments of the present disclosure, there is provided a computer readable storage medium, on which a computer program is stored, where the computer program is used for performing the above scene reconstruction method.
According to yet another aspect of embodiments of the present disclosure, there is provided an electronic device, including:

a processor; and

a memory, configured for storing instructions executable by the processor, where

the processor is configured for reading the executable instructions from the memory, and executing the instructions to implement the above scene reconstruction method.

According to yet aspect of embodiments of the present disclosure, there is provided a computer program product, where when instructions in the computer program product are executed a processor, the above scene reconstruction method is performed.

Based on the scene reconstruction method and apparatus, the medium, and the electronic device that are provided in the embodiments of the present disclosure, background segmentation may be performed on a multi-view image (that is, a first image sequence) captured by a camera, and point-cloud sparse reconstruction is performed by using a second image sequence obtained through background segmentation, to obtain a first reconstructed point cloud and a first camera-pose sequence. In addition, dynamic-static segmentation may also be performed on the multi-view image to obtain a third image sequence corresponding to a static scene and a fourth image sequence corresponding to a dynamic scene. The third image sequence may be used, together with the first reconstructed point cloud and the first camera-pose sequence, for point-cloud dense reconstruction to obtain a second reconstructed point cloud that can effectively represent the static scene. The fourth image sequence may be used, together with the first camera-pose sequence, for point-cloud sparse reconstruction and dense reconstruction to obtain a third reconstructed point cloud that can effectively represent the dynamic scene. A scene reconstruction result corresponding to the first image sequence may be determined in combination with the second reconstructed point cloud and the third reconstructed point cloud. It can be learned that, in the embodiments of the present disclosure, scene reconstruction is implemented through a series of processing of the multi-view image captured by the camera. Compared with lidar, the camera is relatively cheap, and therefore, can reduce the implementation costs of scene reconstruction. In addition, in the embodiments of the present disclosure, the static scene and the dynamic scene are separately processed, that is, the static scene and the dynamic scene are separately reconstructed, making it easier and faster to achieve the reconstruction.

**BRIEF DESCRIPTION OF DRAWINGS**

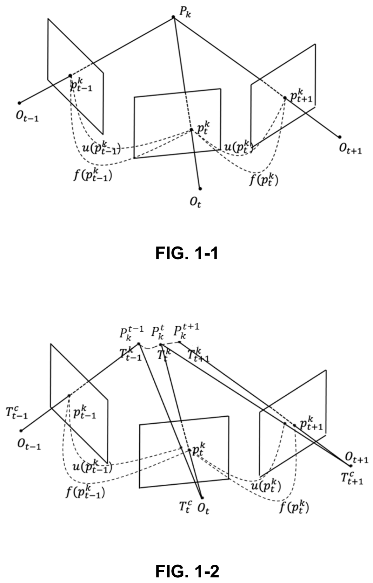

FIG. 1-1 is a schematic diagram illustrating a motion model of a static scene;

FIG. 1-2 is a schematic diagram illustrating a motion model of a dynamic scene;

FIG. 2 is a schematic flowchart illustrating a scene reconstruction method according to an exemplary embodiment of the present disclosure;

FIG. 3 is a first schematic flowchart illustrating a dynamic-static segmentation approach according to an exemplary embodiment of the present disclosure;

FIG. 4 is a second schematic flowchart illustrating a dynamic-static segmentation approach according to an exemplary embodiment of the present disclosure;

FIG. 5-1 is a third schematic flowchart illustrating a dynamic-static segmentation approach according to an exemplary embodiment of the present disclosure;

FIG. 5-2 is a fourth schematic flowchart illustrating a dynamic-static segmentation approach according to an exemplary embodiment of the present disclosure;

FIG. 6 is a schematic flowchart illustrating a reconstruction approach for a dynamic scene according to an exemplary embodiment of the present disclosure;

FIG. 7-1 is a schematic flowchart illustrating a correction approach for an object pose sequence according to an exemplary embodiment of the present disclosure;

FIG. 7-2 is a schematic flowchart illustrating a correction approach for an object pose sequence according to another exemplary embodiment of the present disclosure;

FIG. 8 is a schematic flowchart illustrating a dense reconstruction approach for a dynamic scene according to an exemplary embodiment of the present disclosure;

FIG. 9 is a schematic flowchart illustrating a dense reconstruction approach for a static scene according to an exemplary embodiment of the present disclosure;

FIG. 10 is a schematic flowchart illustrating a dense reconstruction approach for a static scene according to another exemplary embodiment of the present disclosure;

FIG. 11 is a schematic flowchart illustrating a dense reconstruction approach for a static scene according to still another exemplary embodiment of the present disclosure;

FIG. 12 is a schematic flowchart illustrating a scene reconstruction method according to another exemplary embodiment of the present disclosure;

FIG. 13 is a schematic diagram illustrating a structure of a scene reconstruction apparatus according to an exemplary embodiment of the present disclosure;

FIG. 14 is a schematic diagram illustrating a structure of a scene reconstruction apparatus according to another exemplary embodiment of the present disclosure;

FIG. 15-1 is a schematic diagram illustrating a structure of a scene reconstruction apparatus according to still another exemplary embodiment of the present disclosure;

FIG. 15-2 is a schematic diagram illustrating a structure of a scene reconstruction apparatus according to yet another exemplary embodiment of the present disclosure;

FIG. 16 is a schematic diagram illustrating a structure of a scene reconstruction apparatus according to yet another exemplary embodiment of the present disclosure;

FIG. 17 is a schematic diagram illustrating a structure of a scene reconstruction apparatus according to yet another exemplary embodiment of the present disclosure;

FIG. 18 is a schematic diagram illustrating a structure of a scene reconstruction apparatus according to yet another exemplary embodiment of the present disclosure; and

FIG. 19 is a diagram illustrating a structure of an electronic device according to an exemplary embodiment of the present disclosure.

## DETAILED DESCRIPTION OF THE EMBODIMENTS

To explain the present disclosure, exemplary embodiments of the present disclosure will be described in detail below with reference to the accompanying drawings. Apparently, the described embodiments are merely some, not all, of embodiments of the present disclosure. It should be understood that, the present disclosure is not limited by the exemplary embodiments.

It should be noted that the relative arrangement of components and steps, numerical expressions, and numerical values set forth in these embodiments do not limit the scope of the present disclosure, unless otherwise specifically stated.

Overview of Application

Lidar is a radar system for detecting features of a target such as a position, a velocity, an orientation, a pose, a shape, and the like by emitting laser beams.

Lidar may be applied to scene reconstruction, such as scene reconstruction of an outdoor scene for unmanned driving. However, lidar is expensive, resulting in high implementation costs of scene reconstruction. It is a noteworthy issue, for a person skilled in the art, how to reduce the implementation costs of scene reconstruction.

Exemplary System

Various types of models, such as an optical flow prediction model, a depth prediction model, and an instance segmentation model, as well as a motion model for a static scene and a motion model for a dynamic scene, are involved hereinafter. To ease the understanding, these models are briefly introduced herein.

The optical flow prediction model, the depth prediction model, and the instance segmentation model may all be convolutional neural network (CNN) models. A frame of image being provided as an input to the optical flow prediction model, the optical flow prediction model may predict an optical flow value of each of pixels in the frame of image, where an optical flow value of any pixel may be used for indicating, in a next frame of image, a pixel position corresponding to a pixel position of the pixel. A frame of image being provided as an input to the depth prediction model, the depth prediction model may predict a depth value of each of pixels in the frame of image, where a depth value of any pixel may be used for determining a spatial position of the pixel in a camera coordinate system. A frame of image being provided as an input to the instance segmentation model, the instance segmentation model may predict a category of each of pixels in the frame of image and locate different instances in the frame of image.

The motion model for a static scene may be a mathematical model for describing a motion law of an object in a static scene, for which, reference may be made to FIG. 1-1. The motion model for a dynamic scene may be a mathematical model for describing a motion law of an object in a dynamic scene, for which, reference may be made to FIG. 1-2. As shown in FIG. 1-1, a camera being moving, optical centers of the camera at a time t-1, a time t, and a time t+1 are $O_{t\text{-}1}$, $O_t$, and $O_{t+1}$, respectively; and an object (such as a lane line or a building) being static, and a $k^{th}$ point on the object being always denoted by $P_k$, projection points of the $k^{th}$ point on the object in images captured by the camera at the time t-1, the time t, and the time t+1 are $P_{t-1}^k$, $P_t^k$, and $P_{t+1}^k$, respectively. FIG. 1-2 is different from FIG. 1-1 primarily by that both a camera and an object (such as a vehicle or a pedestrian) are moving, where a $k^{th}$ point on the object at a time t-1, a time t, and a time t+1 may be denoted as $P_k^{t-1}$, $P_k^t$, and $P_k^{t+1}$, respectively, and poses of the object at the time t-1, the time t, and the time t+1 may be denoted as $T_{t-1}^k$, $T_t^k$, and $T_{t+1}^k$, respectively.

Exemplary Method

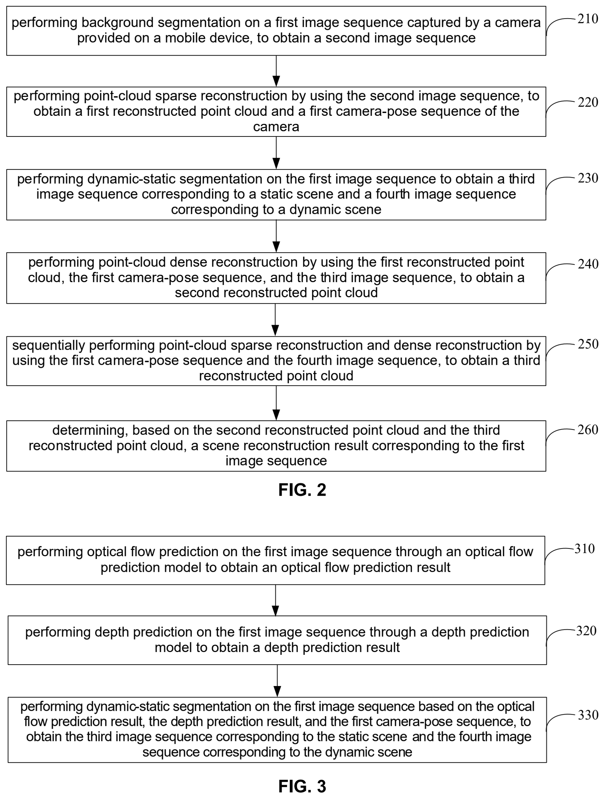

FIG. 2 is a schematic flowchart illustrating a scene reconstruction method according to an exemplary embodiment of the present disclosure. The method shown in FIG. 2 may include step 210, step 220, step 230, step 240, step 250, and step 260, which are described below, respectively.

Step 210: Performing background segmentation on a first image sequence captured by a camera provided on a mobile device, to obtain a second image sequence.

Optionally, the mobile device includes, but is not limited to, a vehicle, a train, a ship, or the like. The camera provided on the mobile device includes, but is not limited to, a front-view camera, a rear-view camera, a side-view camera, or the like.

The camera provided on the mobile device may perform image capturing at a certain frame rate to obtain a first image sequence including a multiple frames of captured images. To ease understanding, in the embodiments of the present disclosure, a case that the multiple frames of captured image in the first image sequence are N frames of captured images is used as an example for description.

For each of the N frames of captured images included in the first image sequence, instance segmentation may be performed on the captured image through an instance segmentation model, to determine a predicted category of each of pixels in the captured image, thereby determining which areas in the captured image are areas in which a movable object (such as a vehicle or a pedestrian) is located, so that masks are generated in these areas, for removing the movable object from the captured image, with only a completely static object (such as a ground, a wall, a building, or a tree) being retained. In this way, a background image may be segmented from the captured image.

In the manner described in the previous paragraph, N frames of background images in a one-to-one correspondence with the N frames of captured images may be obtained. The N frames of background images are arranged in chronological order to form a second image sequence.

As above, the instance segmentation model is applied to implement background segmentation of the first image sequence to obtain the second image sequence. In some cases, a semantic segmentation model may also be applied to implement foreground and background separation of each frame of captured image in the first image sequence to obtain the second image sequence.

In an optional example, step 210 may be implemented by a processor calling corresponding instructions stored in a memory, or may be implemented by a first segmentation module run by the processor.

Step 220: Performing point-cloud sparse reconstruction by using the second image sequence, to obtain a first reconstructed point cloud and a first camera-pose sequence of the camera.

For each of the N frames of background images included in the second image sequence, a key point detection algorithm may be used to perform key point detection on the background image. The key point detection algorithm includes, but is not limited to, a scale-invariant feature transform (SIFT) algorithm, a deep learning-based algorithm, or the like.

When respective key points of the N frames of background images are known, matching and screening may be performed on the key points, and further in combination with applying of an incremental structure from motion (SFM) algorithm, camera poses of the camera at capture times respectively corresponding to the N frames of captured images may be determined to obtain N camera poses. Arranging the N camera poses in chronological order may form the first camera-pose sequence. In addition, a plurality of three-dimensional points in a world coordinate system may also be determined to form the first reconstructed point cloud.

Certainly, the algorithms by which the first reconstructed point cloud and the first camera-pose sequence are generated are not limited to the incremental SFM algorithm, and may also be a global SFM algorithm, a hybrid SFM algorithm, and the like, which are not listed herein one by one.

In an optional example, step 220 may be implemented by a processor calling corresponding instructions stored in a memory, or may be implemented by a first reconstruction module run by the processor.

Step 230: Performing dynamic-static segmentation on the first image sequence to obtain a third image sequence corresponding to a static scene and a fourth image sequence corresponding to a dynamic scene.

For each of the N frames of captured images included in the first image sequence, it may be determined which objects in the captured image have actually moved and which objects have not moved. In this way, the captured image may be segmented into a segmented image including only the objects that have moved and a segmented image including only the objects that have not moved, thereby implementing dynamic-static segmentation of the captured image. The segmented image including only the objects that have moved may be considered as a segmented image corresponding to the dynamic scene. The segmented image including only the objects that have not moved may be considered as a segmented image corresponding to the static scene.

In the manner described in the previous paragraph, dynamic-static segmentation may be performed on all the N frames of captured images to obtain N frames of segmented images corresponding to the static scene and N frames of segmented images corresponding to the dynamic scene. The N frames of segmented images corresponding to the static scene may be arranged in chronological order to form the third image sequence. The N frames of segmented images corresponding to the dynamic scene may be arranged in chronological order to form the fourth image sequence.

In an optional example, step 230 may be implemented by a processor calling corresponding instructions stored in a memory, or may be implemented by a second segmentation module run by the processor.

Step 240: Performing point-cloud dense reconstruction by using the first reconstructed point cloud, the first camera-pose sequence, and the third image sequence, to obtain a second reconstructed point cloud.

When the first reconstructed point cloud, the first camera-pose sequence, and the third image sequence are known, in combination with the motion model shown in FIG. 1-1, a multi-view stereo (MVS) algorithm may be used to find pixels with photo-consistency in different images in the third image sequence, and perform stereo matching on this basis, thereby determining a plurality of points in the world coordinate system to form the second reconstructed point cloud. The second reconstructed point cloud is denser than the first reconstructed point cloud, and can effectively represent the static scene.

In an optional example, step 240 may be implemented by a processor calling corresponding instructions stored in a memory, or may be implemented by a second reconstruction module run by the processor.

Step 250: Sequentially performing point-cloud sparse reconstruction and dense reconstruction by using the first camera-pose sequence and the fourth image sequence, to obtain a third reconstructed point cloud.

When the first camera-pose sequence and the fourth image sequence are known, sparse reconstruction may be performed through an SFM algorithm first, and then dense reconstruction is performed through an MVS algorithm, to obtain the third reconstructed point cloud. The third reconstructed point cloud can effectively represent the dynamic scene.

In an optional example, step 250 may be implemented by a processor calling corresponding instructions stored in a memory, or may be implemented by a third reconstruction module run by the processor.

Step 260: Determining, based on the second reconstructed point cloud and the third reconstructed point cloud, a scene reconstruction result corresponding to the first image sequence.

Optionally, the second reconstructed point cloud and the third reconstructed point cloud may be separately modeled, to obtain a first three-dimensional model corresponding to the second reconstructed point cloud and a second three-dimensional model corresponding to the third reconstructed point cloud. Subsequently, texture mapping is performed separately on the first three-dimensional model and the second three-dimensional model, so that the scene reconstruction result corresponding to the first image sequence may include a texture-mapped first three-dimensional model and a texture-mapped second three-dimensional model. In some embodiments, the scene reconstruction result corresponding to the first image sequence may further include a motion trajectory of the mobile device, motion trajectories of objects around the mobile device that have moved, and the like.

In an optional example, step 260 may be implemented by a processor calling corresponding instructions stored in a memory, or may be implemented by a determination module run by the processor.

In this embodiment of the present disclosure, background segmentation may be performed on a multi-view image (that is, a first image sequence) captured by a camera, and point-cloud sparse reconstruction is performed by using a second image sequence obtained through background segmentation, to obtain a first reconstructed point cloud and a first camera-pose sequence. In addition, dynamic-static segmentation may also be performed on the multi-view image to obtain a third image sequence corresponding to a static scene and a fourth image sequence corresponding to a dynamic scene. The third image sequence may be used, together with the first reconstructed point cloud and the first camera-pose sequence, for point-cloud dense reconstruction to obtain a second reconstructed point cloud that can effectively represent the static scene. The fourth image sequence may be used, together with the first camera-pose sequence, for point-cloud sparse reconstruction and dense reconstruction to obtain a third reconstructed point cloud that can effectively represent the dynamic scene. A scene reconstruction result corresponding to the first image sequence may be determined in combination with the second reconstructed point cloud and the third reconstructed point cloud. It can be learned that, in this embodiment of the present disclosure, scene reconstruction is implemented through a series of processing of the multi-view image captured by the camera. Compared with lidar, the camera is very cheap, and therefore, can reduce the implementation costs of scene reconstruction. In addition, in this embodiment of the present disclosure, the static scene and the dynamic scene are separately processed, that is, the static scene and the dynamic scene are separately reconstructed, making it easier and faster to achieve the reconstruction.

FIG. 3 is a schematic flowchart illustrating a dynamic-static segmentation approach according to an exemplary embodiment of the present disclosure. The method shown in FIG. 3 may include step 310, step 320, and step 330, which are separately described below.

Step 310: Performing optical flow prediction on the first image sequence through an optical flow prediction model to obtain an optical flow prediction result.

For each of the N frames of captured images included in the first image sequence, the captured image may be provided as an input to the optical flow prediction model, and the optical flow prediction model may perform an operation accordingly, to obtain an optical flow value of each of pixels in the captured image. The respective optical flow values of all of pixels in the captured image may form optical flow prediction data corresponding to the captured image.

In the manner described in the previous paragraph, optical flow prediction data respectively corresponding to the N frames of captured images may be obtained. The optical flow prediction data respectively corresponding to the N frames of captured images may form the optical flow prediction result corresponding to the first image sequence.

In an optional example, step 310 may be implemented by a processor calling corresponding instructions stored in a memory, or may be implemented by a first prediction module run by the processor.

Step 320: Performing depth prediction on the first image sequence through a depth prediction model to obtain a depth prediction result.

For each of the N frames of captured images included in the first image sequence, the captured image may be provided as an input to the depth prediction model, and the depth prediction model may perform an operation accordingly, to obtain a depth value of each of pixels in the captured image. The respective depth values corresponding to all of pixels in the captured image may form depth prediction data corresponding to the captured image. Optionally, the depth prediction data corresponding to the captured image may be in a form of a depth map.

In the manner described in the previous paragraph, depth prediction data respectively corresponding to the N frames of captured images may be obtained. The depth prediction data respectively corresponding to the N frames of captured images may form the depth prediction result corresponding to the first image sequence.

In an optional example, step 320 may be implemented by a processor calling corresponding instructions stored in a memory, or may be implemented by a second prediction module run by the processor.

Step 330: Performing dynamic-static segmentation on the first image sequence based on the optical flow prediction result, the depth prediction result, and the first camera-pose sequence, to obtain the third image sequence corresponding to the static scene and the fourth image sequence corresponding to the dynamic scene.

In an optional example, step 330 may be implemented by a processor calling corresponding instructions stored in a memory, or may be implemented by a second segmentation module run by the processor.

Optionally, step 330 may be used as an optional implementation of step 230 in the embodiment shown in FIG. 2.

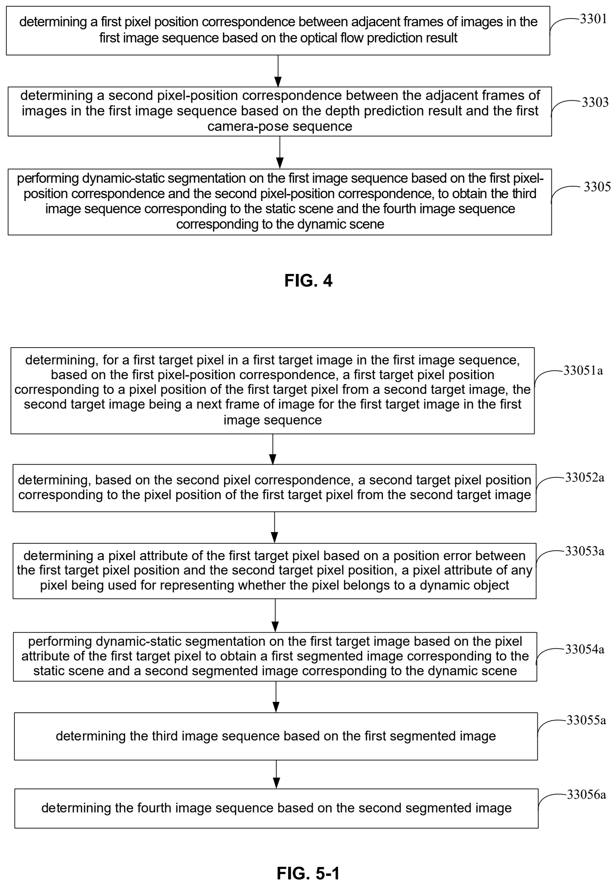

In some optional implementations of the present disclosure, as shown in FIG. 4, step 330 may include step 3301, step 3303, and step 3305.

Step 3301: Determining a first pixel position correspondence between adjacent frames of images in the first image sequence based on the optical flow prediction result.

It is assumed that the N captured images in the first image sequence are sequentially expressed as an image 1, an image 2, an image 3, ..., and an image N, and an optical flow value corresponding to a pixel 1 in the image 1 is used for indicating that a pixel position of a pixel 2 in the image 2 corresponds to a pixel position of the pixel 1 in the image 1. In this case, the first pixel-position correspondence may include a correspondence between the pixel position of the pixel 1 and the pixel position of the pixel 2. In this manner, the first pixel-position correspondence may include pixel-position correspondences for a plurality of matching pixel pairs. The pixel 1 and the pixel 2 may form a matching pixel pair.

In an optional example, step 3301 may be implemented by a processor calling corresponding instructions stored in a memory, or may be implemented by a first determination submodule run by the processor.

Step 3303: Determining a second pixel-position correspondence between the adjacent frames of images in the first image sequence based on the depth prediction result and the first camera-pose sequence.

The first camera-pose sequence may include a camera pose corresponding to the image 1 and a camera pose corresponding to the image 2. A translation matrix and a rotation matrix of the camera from a capture time corresponding to the image 1 to a capture time corresponding to the image 2 may be calculated by using the camera pose corresponding to the image 1 and the camera pose corresponding to the image 2.

Referring to the motion model shown in FIG. 1-1, when a depth value corresponding to the pixel 1 and the translation matrix and the rotation matrix of the camera from the capture time corresponding to the image 1 to the capture time corresponding to the image 2 are known, in combination with pre-calibrated camera intrinsic parameters, a pixel 2' corresponding to the pixel 1 on the image 2 may be determined by Formula as below:

$$\mathsf{u}(P_t^k) = \mathsf{K} * [R_t^c * K^{-1} * P_t^k * D_t(P_t^k) + t_t^c]$$

where $\mathsf{u}(P_t^k)$ represents a pixel position of the pixel 2', K represents the pre-calibrated camera intrinsic parameters and is in a form of a matrix, $R_t^c$ represents the rotation matrix of the camera from the capture time corresponding to the image 1 to the capture time corresponding to the image 2, $K^{-1}$ represents an inverse matrix of K, $P_t^k$ represents the pixel position of the pixel 1, $D_t(P_t^k)$ represents the depth value of the pixel 1 in the depth prediction result, and $t_t^c$ represents the translation matrix of the camera from the capture time corresponding to the image 1 to the capture time corresponding to the image 2.

The above formula may be construed as follows: transforming the pixel 1 in the image 2 first from a pixel coordinate system to a camera coordinate system and then from the camera coordinate system to a world coordinate system, to obtain a spatial point 1 in the world coordinate system corresponding to the pixel 1, and subsequently transforming the spatial point 1 first from the world coordinate system to the camera coordinate system and then from the camera coordinate system to the pixel coordinate system, to determine the pixel 2' on the image 2 corresponding to the pixel 1. The second pixel-position correspondence may include a correspondence between the pixel position of the pixel 1 and the pixel position of the pixel 2'. In this manner, the second pixel-position correspondence may include pixel-position correspondences for a plurality of matching pixel pairs. The pixel 1 and the pixel 2' may form a matching pixel pair.

In an optional example, step 3303 may be implemented by a processor calling corresponding instructions stored in a memory, or may be implemented by a second determination submodule run by the processor.

Step 3305: Performing dynamic-static segmentation on the first image sequence based on the first pixel-position correspondence and the second pixel-position correspondence, to obtain the third image sequence corresponding to the static scene and the fourth image sequence corresponding to the dynamic scene.

In an optional example, step 3305 may be implemented by a processor calling corresponding instructions stored in a memory, or may be implemented by a segmentation submodule run by the processor.

In some optional implementations of the present disclosure, as shown in FIG. 5-1, step 3305 includes step 33051a, step 33052a, step 33053a, step 33054a, step 33055a, and step 33056a.

Step 33051a: Determining, for a first target pixel in a first target image in the first image sequence, based on the first pixel-position correspondence, a first target pixel position corresponding to a pixel position of the first target pixel from a second target image, the second target image being a next frame of image for the first target image in the first image sequence.

Step 33052a: Determining, based on the second pixel correspondence, a second target pixel position corresponding to the pixel position of the first target pixel from the second target image.

It should be noted that the first target image may be any frame of image in the first image sequence other than the last frame of image, and the first target pixel may be any pixel in the first target image.

It is assumed that the first target image is the image 1, the second target image is the image 2, and the first target pixel is the pixel 1, then, based on the first pixel-position correspondence, the first target pixel position determined from the second target image may be the pixel position of the pixel 2 in the image 2, and the second target pixel position determined from the second target image may be the pixel position of the pixel 2' in the image 2.

Step 33053a: Determining a pixel attribute of the first target pixel based on a position error between the first target pixel position and the second target pixel position, a pixel attribute of any pixel being used for representing whether the pixel belongs to a dynamic object.

It is assumed that the first target pixel position is denoted by f(p), and the second target pixel position is denoted by u(p). In this case, the position error between the first target pixel position and the second target pixel position may be expressed as |f(p)-u(p)|. For ease of description, the position error between the first target pixel position and the second target pixel position is referred to as a pixel position error for short below. The pixel attribute of the first target pixel may be determined based on the pixel position error and a preset position error.

Optionally, if the pixel position error is greater than the preset position error, the pixel attribute of the first target pixel may be determined as a first-category attribute for representing that the first target pixel belongs to a dynamic object. If the pixel position error is less than or equal to the preset position error, the pixel attribute of the first target pixel may be determined as a second-category attribute for representing that the first target pixel does not belong to a dynamic object, that is, the first target pixel belongs to a static object.

Certainly, the approach for determining a pixel attribute is not limited thereto. For example, a difference between the pixel position error and the preset position error may be calculated, and a ratio of an absolute value of the difference to the preset position error is calculated. If the calculated ratio is greater than a preset ratio, the pixel attribute of the first target pixel may be determined as a first-category attribute for representing that the first target pixel belongs to a dynamic object. If the calculated ratio is less than or equal to a preset ratio, the pixel attribute of the first target pixel may be determined as a second-category attribute for representing that the first target pixel does not belong to a dynamic object, that is, the first target pixel belongs to a static object.

Step 33054a: Performing dynamic-static segmentation on the first target image based on the pixel attribute of the first target pixel to obtain a first segmented image corresponding to the static scene and a second segmented image corresponding to the dynamic scene.

In the approach for determining a pixel attribute described above, a pixel attribute of each of pixels in the first target image may be obtained. Dynamic objects may be removed from the first target image by generating a mask in an area in which pixels whose pixel attributes are first-category attributes are distributed in the first target image. In this way, the first segmented image corresponding to the static scene may be obtained through segmentation. Similarly, static objects may be removed from the first target image by generating a mask in an area in which pixels whose pixel attributes are second-category attributes are distributed in the first target image. In this way, the second segmented image corresponding to the dynamic scene may be obtained through segmentation.

Step 33055a: Determining the third image sequence based on the first segmented image.

Step 33056a: Determining the fourth image sequence based on the second segmented image.

The dynamic-static segmentation approach for the first target image is described above. Dynamic-static segmentation may be performed on each frame of captured image in the first image sequence in a similar approach. In this way, N frames of segmented images corresponding to the static scene and N frames of segmented images corresponding to the dynamic scene may be obtained. The N frames of segmented images corresponding to the static scene may be arranged in chronological order to form the third image sequence. The N frames of segmented images corresponding to the dynamic scene may be arranged in chronological order to form the fourth image sequence.

In some embodiments, after the N frames of segmented images corresponding to the static scene and the N frames of segmented images corresponding to the dynamic scene are obtained, these segmented images may be corrected (for example, filtered) by using a certain algorithm, and then the third image sequence and the fourth image sequence are determined based on the corrected segmented images.

In an optional example, step 33051a to step 33056a may be implemented by a processor calling corresponding instructions stored in a memory, or may be implemented by corresponding units in a segmentation submodule run by the processor.

In such an implementation, through comparison of a position error between two target pixel positions obtained based on a first pixel correspondence and a second pixel correspondence, the position error may be used as reference information to determine, in the first target image, which pixels belong to a dynamic object and which pixels belong to a static object. On this basis, dynamic-static segmentation may be efficiently and reliably performed on the first target image, so that the third image sequence and the fourth image sequence are obtained for subsequent steps.

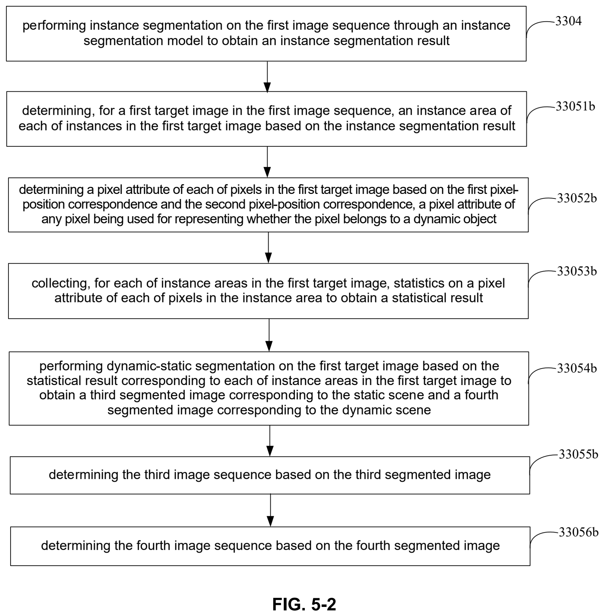

In some optional implementations of the present disclosure, as shown in FIG. 5-2, the method provided in this embodiment of the present disclosure further includes step 3304.

Step 3304: Performing instance segmentation on the first image sequence through an instance segmentation model to obtain an instance segmentation result.

For each of the N frames of captured images included in the first image sequence, the captured image may be provided as an input to the instance segmentation model, and the instance segmentation model may perform an operation accordingly, to obtain a predicted category of each of pixels in the captured image and an instance area of each of instances (which may be either a static object or a dynamic object) in the captured image. These information may form the instance segmentation data corresponding to the captured image.

In an optional example, step 3304 may be implemented by a processor calling corresponding instructions stored in a memory, or may be implemented by a third segmentation module run by the processor.

In the manner described in the previous paragraph, instance segmentation data respectively corresponding to the N frames of captured images may be obtained. The instance segmentation data respectively corresponding to the N frames of captured images may form the instance segmentation result corresponding to the first image sequence.

Step 3305 includes step 33051b, step 33052b, step 33053b, step 33054b, step 33055b, and step 33056b.

In an optional example, step 3305 may be implemented by a processor calling corresponding instructions stored in a memory, or may be implemented by a segmentation submodule run by the processor.

Step 33051b: Determining, for a first target image in the first image sequence, an instance area of each of instances in the first target image based on the instance segmentation result.

Optionally, instance segmentation data corresponding to the first target image may be directly extracted from the instance segmentation result, and the instance area of each of instances in the first target image may be located based on the instance segmentation data corresponding to the first target image.

Step 33052b: Determining a pixel attribute of each of pixels in the first target image based on the first pixel-position correspondence and the second pixel-position correspondence, a pixel attribute of any pixel being used for representing whether the pixel belongs to a dynamic object.

It should be noted that, for the approach for determining a pixel attribute of each of pixels in the first target image based on the first pixel-position correspondence and the second pixel-position correspondence, reference may be made to the related description in the implementation shown in FIG. 5-1, and details are not described herein again.

Step 33053b: Collecting, for each of instance areas in the first target image, statistics on a pixel attribute of each of pixels in the instance area to obtain a statistical result.

Optionally, for each of instance areas in the first target image, statistics may be collected on a first number and a first proportion of pixels whose pixel attributes are first-category attributes in the instance area, and a second number and a second proportion of pixels whose pixel attributes are second-category attributes in the instance area. The first number, the first proportion, the second number, and the second proportion that corresponding to each of instance areas in the first target image may form the statistical result.

In some cases, alternatively, the statistical result may include only a first number and a second number that correspond to each of instance areas in the first target image, or only a first proportion and a second proportion that corresponding to each of instance areas in the first target image.

Step 33054b: Performing dynamic-static segmentation on the first target image based on the statistical result corresponding to each of instance areas in the first target image to obtain a third segmented image corresponding to the static scene and a fourth segmented image corresponding to the dynamic scene.

In some optional implementations of the present disclosure, step 33054b includes:

determining, for each of instance areas in the first target image, based on the statistical result corresponding to the instance area, a proportion of pixels in the instance area that have pixel attributes for representing that the current pixels do not belong to the dynamic object; and performing dynamic-static segmentation on the first target image based on the proportion corresponding to each of instance areas in the first target image to obtain the third segmented image corresponding to the static scene and the fourth segmented image corresponding to the dynamic scene.

It is assumed that the statistical result includes a second proportion corresponding to each of instance areas in the first target image, and a second proportion corresponding to any instance area may be considered as a proportion of pixels in the instance area that have pixel attributes for representing that the current pixels do not belong to a dynamic object. In this case, dynamic-static segmentation may be performed on the target image directly based on the second proportion corresponding to each of instance areas in the first target image and a preset proportion.

It is assumed that the statistical result does not include a second proportion corresponding to each of instance areas in the first target image, but includes a first proportion corresponding to each of instance areas in the first target image. In this case, for each of instance areas, a difference between a preset value of 1 and the first proportion corresponding to the instance area may be calculated to obtain the second proportion corresponding to the instance area. Subsequently, dynamic-static segmentation is performed on the target image based on the second proportion corresponding to each of instance areas in the first target image and the preset proportion.

Optionally, the preset proportion may be 70%, 75%, 80%, and the like, which are not listed herein one by one.

For any instance area in the first target image, if a second proportion corresponding to the instance area is greater than the preset proportion, it may be determined that the instance area belongs to a static object; or if a second proportion corresponding to the instance area is less than or equal to the preset proportion, it may be determined that the instance area belongs to a dynamic object. Dynamic objects may be removed from the first target image by generating a mask in each of instance areas belonging to a dynamic object in the first target image. In this way, the third segmented image corresponding to the static scene may be obtained through segmentation. Similarly, static objects may be removed from the first target image by generating a mask in each of instance areas belonging to a static object in the first target image. In this way, the fourth segmented image corresponding to the dynamic scene may be obtained through segmentation.

In the previous paragraph, the case of performing dynamic-static segmentation with reference to the second proportion corresponding to each of instance areas is described. In some cases, alternatively, dynamic-static segmentation may be performed with reference to the first proportion corresponding to each of instance areas. For example, for any instance area in the first target image, if a first proportion corresponding to the instance area is less than or equal to the preset proportion, it may be determined that the instance area belongs to a static object; or if a first proportion corresponding to the instance area is greater than the preset proportion, it may be determined that the instance area belongs to a dynamic object. On this basis, the third segmented image corresponding to the static scene and the fourth segmented image corresponding to the dynamic scene may also be obtained through segmentation by generating a mask.

Step 33055b: Determining the third image sequence based on the third segmented image.

Step 33056b: Determining the fourth image sequence based on the fourth segmented image.

It should be noted that, for specific implementations of step 33055b and 33056b, reference may be made to the related descriptions of step 33055a and 33056a above, and details are not described herein again.

It should be noted that, there may be certain prediction errors in both the depth prediction model and the optical flow prediction model, and there is also a certain estimation error in the process of obtaining the first camera-pose sequence. To reduce impacts of these errors on the scene reconstruction result, an instance area of each of instances in the first target image may be determined by using the instance segmentation model, and statistics collection is performed for pixel attributes for each of instance areas, so as to use the statistical result for dynamic-static segmentation of the first target image. For example, dynamic-static segmentation may be performed with reference to a proportion of pixels whose pixel attributes are second-category attributes in each of instance areas. As such, it as such is equivalent to introducing certain constraints (motion states of various points on a same object are typically consistent, that is, these points are either fixed or moving together) into the dynamic-static segmentation process, thereby helping make dynamic-static segmentation results more robust. In this way, use of the dynamic-static segmentation results in subsequent steps helps improve a final scene reconstruction effect.

In an optional example, step 33051b to step 33056b may be implemented by a processor calling corresponding instructions stored in a memory, or may be implemented by corresponding units in a segmentation submodule run by the processor.

In this embodiment of the present disclosure, through application of an optical flow prediction model, an optical flow prediction result corresponding to a first image may be efficiently and reliably determined, and the optical flow prediction result may be used for determining a first pixel-position correspondence between adjacent frames of images. Through application of a depth prediction model, a depth prediction result corresponding to a first image sequence may be efficiently and reliably determined, and the depth prediction result may be used, together with a first camera-pose sequence, for determining a second pixel-position correspondence between the adjacent frames of images. The first pixel-position correspondence may be considered as an object tracking result obtained in one approach. The second pixel-position correspondence may be considered as an object tracking result obtained in another manner. A position error may be determined in combination with the first pixel-position correspondence and the second pixel-position correspondence, and the determined position error may be considered as a residual flow. Using the residual flow as reference information may accurately distinguish between a dynamic object and a static object in an image, thereby improving a dynamic-static segmentation effect for the first image sequence. During specific implementation, some more complex tracking algorithms may also be introduced, and tracking results obtained through the tracking algorithms are used for dynamic-static segmentation.

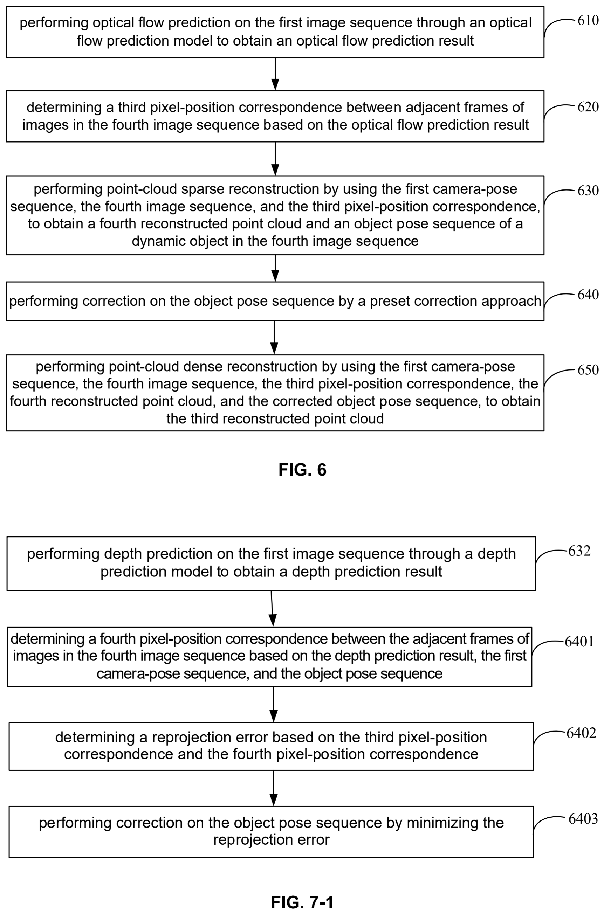

FIG. 6 is a schematic flowchart illustrating a reconstruction approach for a dynamic scene according to an exemplary embodiment of the present disclosure. The approach shown in FIG. 6 includes step 610, step 620, step 630, step 640, and step 650. Optionally, a combination of step 620 to step 650 may be used as an optional implementation of step 250.

Step 610: Performing optical flow prediction on the first image sequence through an optical flow prediction model to obtain an optical flow prediction result.

It should be noted that, for a specific implementation of step 610, reference may be made to the related description of step 310 above, and details are not described herein again.

In an optional example, step 610 may be implemented by a processor calling corresponding instructions stored in a memory, or may be implemented by a first prediction module run by the processor.

Step 620: Determining a third pixel-position correspondence between adjacent frames of images in the fourth image sequence based on the optical flow prediction result.

It should be noted that, for a specific implementation of step 620, reference may be made to the related description of step 3301 above, and details are not described herein again.

In an optional example, step 620 may be implemented by a processor calling corresponding instructions stored in a memory, or may be implemented by a third determination submodule run by the processor.

Step 630: Performing point-cloud sparse reconstruction by using the first camera-pose sequence, the fourth image sequence, and the third pixel-position correspondence, to obtain a fourth reconstructed point cloud and an object pose sequence of a dynamic object in the fourth image sequence.

When the first camera-pose sequence, the fourth image sequence, and the third pixel-position correspondence are known, an SFM algorithm may be applied, in combination with the motion model shown in FIG. 1-2, to obtain the fourth reconstructed point cloud and the object pose sequence of the dynamic object in the fourth image sequence. The object pose sequence may include object poses of the dynamic object in the fourth image sequence at the respective capture times of the N frames of captured images.

It should be noted that, in the above descriptions, the formula for determining the pixel 2' in the image 2 corresponding to the pixel 1 with reference to the motion model shown in FIG. 1-1 is provided, and the basic principle of the formula is elaborated, where when performing point-cloud sparse reconstruction using the first camera-pose sequence, the fourth image sequence, and the third pixel-position correspondence, a plurality of matching pixel pairs also need to be found. A main difference from the basic principle elaborated previously is that movement of the object needs to be considered in the process herein of seeking the plurality of matching pixel pairs.

It is assumed that the pixel 1 in the image 1 belongs to a moving object c, and the pixel 1 may be a point with a relatively significant feature in the moving object c, for example, a point with a relatively large gradient. Herein, the pixel 1 in the image 1 may be transformed first from the pixel coordinate system to the camera coordinate system and then from the camera coordinate system to the world coordinate system, to obtain the spatial point 1 corresponding to the pixel 1 in the world coordinate system at the capture time corresponding to the image 1. Next, with reference to a translation matrix of the moving object c from the capture time corresponding to the image 1 to the capture time corresponding to the image 2, the spatial point 1 may be transformed from the capture time corresponding to the image 1 to the capture time corresponding to the image 2, to obtain a spatial point 1'. Subsequently, the spatial point 1' may be transformed first from the world coordinate system to the camera coordinate system and then from the camera coordinate system to the pixel coordinate system, thereby determining a pixel 2" in the image 2 corresponding to the pixel 1. The pixel 1 and the pixel 2" may form a matching pixel pair.

In an optional example, step 630 may be implemented by a processor calling corresponding instructions stored in a memory, or may be implemented by a first reconstruction submodule run by the processor.

Step 640: Performing correction on the object pose sequence by a preset correction approach.

In an optional example, step 640 may be implemented by a processor calling corresponding instructions stored in a memory, or may be implemented by a correction submodule run by the processor.

In some optional implementations of the present disclosure, as shown in FIG. 7-1, the method provided in this embodiment of the present disclosure further includes step 632.

Step 632: Performing depth prediction on the first image sequence through a depth prediction model to obtain a depth prediction result.

It should be noted that, for a specific implementation of step 632, reference may be made to the related description of step 320 above, and details are not described herein again.

In an optional example, step 632 may be implemented by a processor calling corresponding instructions stored in a memory, or may be implemented by a second prediction module run by the processor.

Step 640 includes step 6401, step 6402, and step 6403.

Step 6401: Determining a fourth pixel-position correspondence between the adjacent frames of images in the fourth image sequence based on the depth prediction result, the first camera-pose sequence, and the object pose sequence.

It should be noted that, the approach for determining the fourth pixel-position correspondence is similar to the above approach for determining the second pixel-position correspondence, primarily except that the determination of the fourth pixel-position correspondence refers to the motion model shown in FIG. 1-2, requiring consideration of the movement of the object in the the process of determination, for details of which, reference may be made to the above description of the approach for determining the pixel 2" in the image 2 corresponding to the pixel 1, and therefore, use of the object pose sequence is required, while the determination of the second pixel-position correspondence refers to the motion model shown in FIG. 1-1, not requiring the consideration of the movement of the object in the process of determination.

Step 6402: Determining a reprojection error based on the third pixel-position correspondence and the fourth pixel-position correspondence.

It should be noted that the approach for determining the position error for the first target pixel based on the first pixel-position correspondence and the second pixel-position correspondence is described above. Herein, position errors respectively corresponding to a plurality of target pixels may be determined in a similar approach based on the third pixel-position correspondence and the fourth pixel-position correspondence. Subsequently, the reprojection error may be determined based on the position errors respectively corresponding to the plurality of target pixels. For example, an average value of the position errors respectively corresponding to the plurality of target pixels may be directly calculated and the average value obtained through calculation is used as the reprojection error. For another example, a position error with an obviously abnormal value (for example, an extremely large or small position error) may be removed from the position errors respectively corresponding to the plurality of target pixels, an average value of the remaining position errors is then calculated, and average value obtained through calculation is used as the reprojection error.

Step 6403: Performing correction on the object pose sequence by minimizing the reprojection error.

Optionally, the reprojection error may be minimized through a specified optimization algorithm, which may be either a linear optimization algorithm or a nonlinear optimization algorithm, for example, a linear least squares method or a nonlinear least squares method.

The calculation of the reprojection error requires use of the fourth pixel-position correspondence, and the determination of the fourth pixel-position correspondence requires use of the object pose sequence. In other words, the object pose sequence and the reprojection error are interrelated. In this way, the object pose sequence may be optimized by minimizing the reprojection error, and use of the corrected object pose sequence for subsequent point cloud reconstruction helps improve a point cloud reconstruction effect.

In an optional example, step 6401 to step 6403 may be implemented by a processor calling corresponding instructions stored in a memory, or may be implemented by corresponding units in a correction submodule run by the processor.

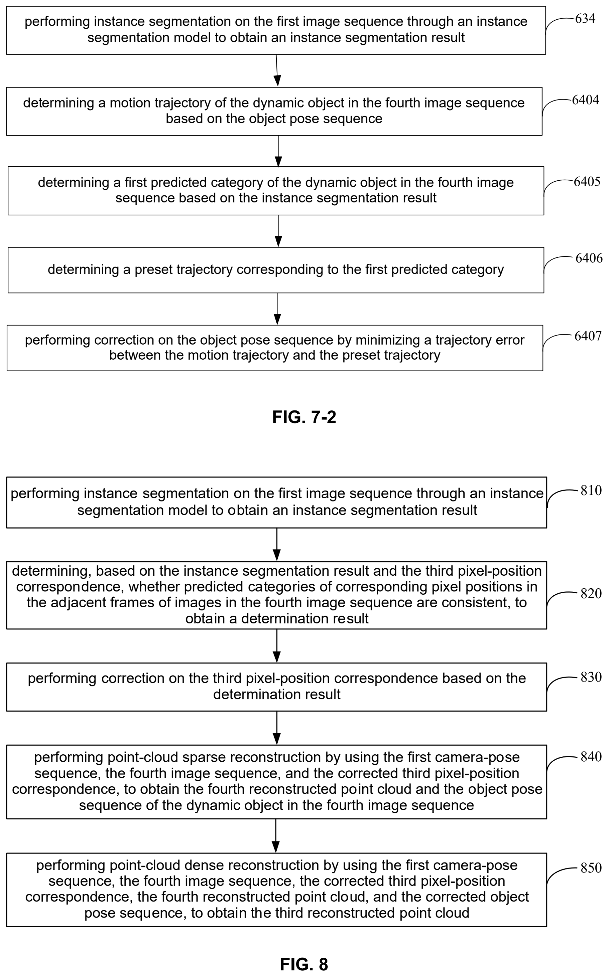

In some other optional implementations of the present disclosure, as shown in FIG. 7-2, the method provided in this embodiment of the present disclosure further includes step 634.

Step 634: Performing instance segmentation on the first image sequence through an instance segmentation model to obtain an instance segmentation result.

It should be noted that, for a specific implementation of step 634, reference may be made to the related description of step 320 above, and details are not described herein again.

In an optional example, step 634 may be implemented by a processor calling corresponding instructions stored in a memory, or may be implemented by a third segmentation module run by the processor.

Step 640 includes step 6404, step 6405, step 6406, and step 6407.

Step 6404: Determining a motion trajectory of the dynamic object in the fourth image sequence based on the object pose sequence.

For any dynamic object in the fourth image sequence, an object position sequence of the dynamic object may be extracted from the object pose sequence, and positions in the extracted object position sequence may constitute a motion trajectory of the dynamic object. Alternatively, after the object position sequence is extracted, an obviously abnormal position in the extracted object position sequence may be corrected, and positions in the corrected object position sequence may constitute a motion trajectory of the dynamic object.

Step 6405: Determining a first predicted category of the dynamic object in the fourth image sequence based on the instance segmentation result.

Optionally, a predicted category of any dynamic object in the fourth image sequence may be extracted from the instance segmentation result, and the predicted category may be used as the first predicted category.

Step 6406: Determining a preset trajectory corresponding to the first predicted category.

Optionally, a correspondence between categories and trajectories may be preset. In this way, a trajectory corresponding to the first predicted category may be efficiently and reliably determined based on the preset correspondence, and the determined trajectory may be used as the preset trajectory in step 6406.

Step 6407: Performing correction on the object pose sequence by minimizing a trajectory error between the motion trajectory and the preset trajectory.

Optionally, the trajectory error between the motion trajectory and the preset trajectory may be calculated and is minimized through the above specified optimization algorithm.

In an optional example, step 6404 to step 6407 may be implemented by a processor calling corresponding instructions stored in a memory, or may be implemented by corresponding units in a correction submodule run by the processor.

The calculation of the trajectory error requires use of the motion trajectory, and the determination of the motion trajectory requires use of the object pose sequence. In other words, the object pose sequence and the trajectory error are interrelated. In this way, the object pose sequence may be optimized by minimizing the trajectory error, and use of the corrected object pose sequence for subsequent point cloud reconstruction helps improve a point cloud reconstruction effect.

Step 650: Performing point-cloud dense reconstruction by using the first camera-pose sequence, the fourth image sequence, the third pixel-position correspondence, the fourth reconstructed point cloud, and the corrected object pose sequence, to obtain the third reconstructed point cloud.

When the first camera-pose sequence, the fourth image sequence, the third pixel-position correspondence, the fourth reconstructed point cloud, and the corrected object pose sequence are known, with reference to the motion model shown in FIG. 1-2, point-cloud dense reconstruction may be implemented by using an MVS algorithm, to obtain the third reconstructed point cloud.

In an optional example, step 650 may be implemented by a processor calling corresponding instructions stored in a memory, or may be implemented by a second reconstruction submodule run by the processor.

In this embodiment of the present disclosure, through use of an optical flow prediction model, an optical flow prediction result corresponding to a first image may be efficiently and reliably obtained, and the optical flow prediction result may be used for determining a third pixel-position correspondence between adjacent frames of images. The third pixel-position correspondence may be used, together with a first camera-pose sequence and a fourth image sequence, for sparse reconstruction of a dynamic scene to obtain a fourth reconstructed point cloud and an object pose sequence. Subsequently, correction may be performed on the object pose sequence in a certain approach, and the corrected object pose sequence is used, together with the first camera-pose sequence, the fourth image sequence, the third pixel-position correspondence, and the fourth reconstructed point cloud, for dense reconstruction of the dynamic scene. In this way, accuracy and reliability of data on which the dense reconstruction of the dynamic scene relies may be improved, thereby helping improve a final scene reconstruction effect.

FIG. 8 is a schematic flowchart illustrating a dense reconstruction approach for a dynamic scene according to an exemplary embodiment of the present disclosure. The method shown in FIG. 8 includes step 810, step 820, step 830, step 840, and step 850. Optionally, a combination of step 820 to step 840 may be used as an optional implementation of step 630 above, and step 850 may be used as an optional implementation of step 650 above.

Step 810: Performing instance segmentation on the first image sequence through an instance segmentation model to obtain an instance segmentation result.

It should be noted that, for a specific implementation of step 810, reference may be made to the related description of step 3304 above, and details are not described herein again.

Step 820: Determining, based on the instance segmentation result and the third pixel-position correspondence, whether predicted categories of corresponding pixel positions in the adjacent frames of images in the fourth image sequence are consistent, to obtain a determination result.

For a pixel position x1 in any image in the fourth image sequence other than the last frame of image, based on the third pixel-position correspondence, a pixel position x2 in a next frame of image for the image corresponding to the pixel position x1 may be determined. In addition, a predicted category y1 of the pixel position x1 and a predicted category y2 of the pixel position x2 may be determined based on the instance segmentation result. Subsequently, whether the predicted category y1 is consistent with the predicted category y2 may be determined through comparison to obtain a determination result.

Step 830: Performing correction on the third pixel-position correspondence based on the determination result.

If the pixel position x1 and the pixel position x2 belong to a same moving object, theoretically, the predicted categories of the pixel position x1 and the pixel position x2 should be consistent. In view of this, if the determination result represents that the predicted category y1 and the predicted category y2 are inconsistent, it may be determined that the pixel position x1 and the pixel position x2 do not actually belong to a same moving object, and the pixel position x1 and the pixel position x2 actually have no correspondence. Therefore, a correspondence between the pixel position x1 and the pixel position x2 may be deleted from the third pixel-position correspondence, or an invalid mark may be added to the correspondence between the pixel position x1 and the pixel position x2 in the third pixel-position correspondence, to correct the third pixel-position correspondence.

Step 840: Performing point-cloud sparse reconstruction by using the first camera-pose sequence, the fourth image sequence, and the corrected third pixel-position correspondence, to obtain the fourth reconstructed point cloud and the object pose sequence of the dynamic object in the fourth image sequence.

It should be noted that a specific implementation of step 840 is similar to the specific implementation of step 630 described above, primarily except that the corrected third pixel-position correspondence is used in step 840, which helps improve a sparse reconstruction effect for the dynamic scene.

Step 850: Performing point-cloud dense reconstruction by using the first camera-pose sequence, the fourth image sequence, the corrected third pixel-position correspondence, the fourth reconstructed point cloud, and the corrected object pose sequence, to obtain the third reconstructed point cloud.

It should be noted that a specific implementation of step 850 is similar to the specific implementation of step 650 described above, primarily except that the corrected third pixel-position correspondence is used in step 850, which helps improve a dense reconstruction effect for the dynamic scene.

In an optional example, step 810 to step 850 may be implemented by a processor calling corresponding instructions stored in a memory, or may be implemented by corresponding modules run by the processor.

In this embodiment of the present disclosure, through use of an instance segmentation model, an instance segmentation result of a first image sequence may be efficiently and reliably obtained. Through organic use of the instance segmentation result and a third pixel-position correspondence, correction may be performed on the third pixel-position correspondence and the corrected third pixel-position correspondence may be used for point-cloud sparse reconstruction and dense reconstruction, thereby helping improve a reconstruction effect for a dynamic scene.

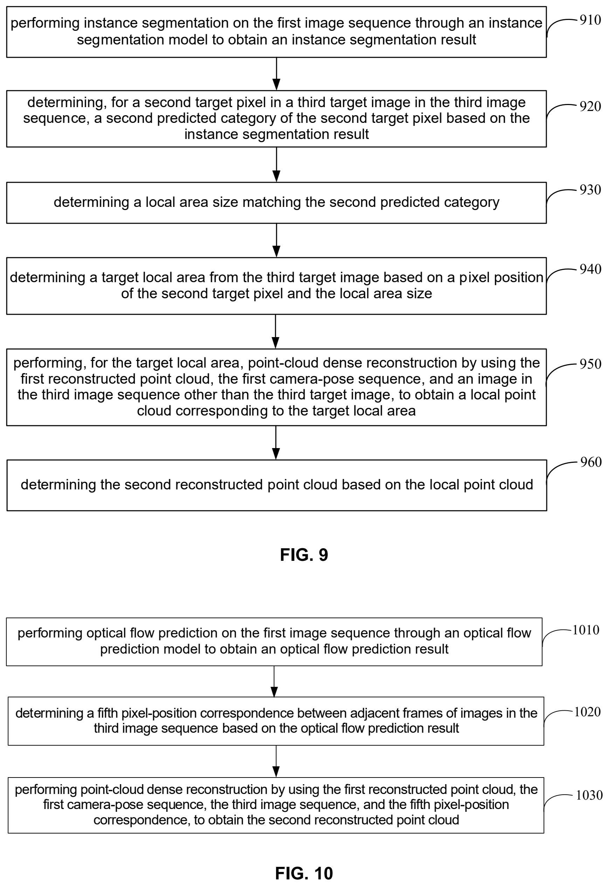

FIG. 9 is a schematic flowchart illustrating a dense reconstruction approach for a static scene according to an exemplary embodiment of the present disclosure. The method shown in FIG. 9 includes step 910, step 920, step 930, step 940, step 950, and step 960. Optionally, a combination of step 920 to step 960 may be used as an optional implementation of step 240.

Step 910: Performing instance segmentation on the first image sequence through an instance segmentation model to obtain an instance segmentation result.

It should be noted that, for a specific implementation of step 910, reference may be made to the related description of step 3304 above, and details are not described herein again.

Step 920: Determining, for a second target pixel in a third target image in the third image sequence, a second predicted category of the second target pixel based on the instance segmentation result.

It should be noted that the third target image may be any image included in the third image sequence, and the second target pixel may be any pixel in the third target image.

Optionally, a predicted category of the second target pixel may be directly extracted from the instance segmentation result, and the extracted predicted category may be used as the second predicted category.

Step 930: Determining a local area size matching the second predicted category.

Optionally, a correspondence between categories and window sizes may be preset. In this way, a window size corresponding to the second predicted category may be determined based on the preset correspondence, and the window size may be used as the local area size matching the second predicted category.

Step 940: Determining a target local area from the third target image based on a pixel position of the second target pixel and the local area size.

Optionally, the local area size may include a width size and a height size. In this case, an area with the pixel position of the second target pixel as a center and having the width size and the height size may be cut out from the third target image as the target local area. In some cases, alternatively, an area with the pixel position of the second target pixel as an upper left corner point and having the width size and the height size may be cut out from the third target image as the target local area.

Step 950: Performing, for the target local area, point-cloud dense reconstruction by using the first reconstructed point cloud, the first camera-pose sequence, and an image in the third image sequence other than the third target image, to obtain a local point cloud corresponding to the target local area.

After the target local area is determined, a spatial area corresponding to the target local area in the world coordinate system may be found by using the first reconstructed point cloud, the first camera-pose sequence, and the pre-calibrated camera intrinsic parameters with reference to the motion model shown in FIG. 1-1. The spatial area may be a rectangular area. Subsequently, spatial points may be sampled in the spatial area to obtain a plurality of spatial points, for example, M spatial points.

For each spatial point in the M spatial points, a pixel corresponding to the spatial point in an image in the third image sequence other than the third target image may be determined by using the first camera-pose sequence and the pre-calibrated camera intrinsic parameters with reference to the motion model shown in FIG. 1-1. A pixel position of the pixel may be represented as a pixel position x3. Because the spatial area and the target local area are interrelated, a pixel corresponding to the spatial point in the target local area may also be calculated, and a pixel position of the pixel may be represented as a pixel position x4. Through matching between images, a pixel position corresponding to the pixel position x4 in another image may also be determined, and the pixel position may be represented as a pixel position x5. Subsequently, a corresponding position error may be obtained through subtraction between the pixel position x5 and the pixel position x4. An average value of position errors respectively corresponding to the M spatial points may be calculated to obtain a reprojection error. A normal vector of the spatial area and depth values of the M spatial points may be optimized based on the obtained reprojection error. The M spatial points with the optimized depth values may constitute a local point cloud corresponding to the target local area.

Step 960: Determining the second reconstructed point cloud based on the local point cloud.

The approach for reconstructing the local point cloud for the target local area corresponding to the second target pixel is described above. In this manner, local point clouds may be separately reconstructed for a plurality of pixels in the third image sequence. These local point clouds may constitute the second reconstructed point cloud. Alternatively, after these local point clouds are obtained, these reconstructed point clouds may be optimized in a certain approach, and the optimized reconstructed point clouds may constitute the second reconstructed point cloud.

In an optional example, step 910 to step 960 may be implemented by a processor calling corresponding instructions stored in a memory, or may be implemented by corresponding modules run by the processor.

In this embodiment of the present disclosure, through use of an instance segmentation model, an instance segmentation result of a first image sequence may be efficiently and reliably obtained, and the instance segmentation result may be used for determining a second predicted category of a second target pixel in a third target image in a third image sequence. With reference to the second predicted category, an appropriate local area size may be determined, and a corresponding local area may be determined based on this, for reconstructing a local point cloud corresponding to the second target pixel. For example, if the second target pixel is located in a weak texture area such as a ground, a large window may be used to reconstruct the local point cloud, so that more scene details may be reconstructed. If the second target pixel is located in a strong texture area, a small window may be used to reconstruct the local point cloud, so that reconstruction precision may be improved. Therefore, this embodiment of the present disclosure may improve a dense reconstruction effect for a static scene.

FIG. 10 is a schematic flowchart illustrating a dense reconstruction approach for a static scene according to another exemplary embodiment of the present disclosure. The method shown in FIG. 10 includes step 1010, step 1020, and step 1030. Optionally, a combination of step 1020 and step 1030 may be used as an optional implementation of step 240.

Step 1010: Performing optical flow prediction on the first image sequence through an optical flow prediction model to obtain an optical flow prediction result.

It should be noted that, for a specific implementation of step 1010, reference may be made to the related description of step 310 above, and details are not described herein again.

Step 1020: Determining a fifth pixel-position correspondence between adjacent frames of images in the third image sequence based on the optical flow prediction result.

It should be noted that, for a specific implementation of step 1020, reference may be made to the related description of step 3301 above, and details are not described herein again.

Step 1030: Performing point-cloud dense reconstruction by using the first reconstructed point cloud, the first camera-pose sequence, the third image sequence, and the fifth pixel-position correspondence, to obtain the second reconstructed point cloud.

In an optional example, step 1010 to step 1030 may be implemented by a processor calling corresponding instructions stored in a memory, or may be implemented by corresponding modules run by the processor.

It should be noted that a specific implementation of step 1030 may be similar to the specific implementation of step 240 described above, primarily except that the fifth pixel-position correspondence is also used for dense reconstruction in step 1031, and the fifth pixel-position correspondence may be considered as an object tracking result obtained in a approach. Guidance of the object tracking result helps clarify which pixels in adjacent frames correspond to a same spatial point, thereby providing an effective reference for the reconstruction process, thus improving a dense reconstruction effect for the static scene.

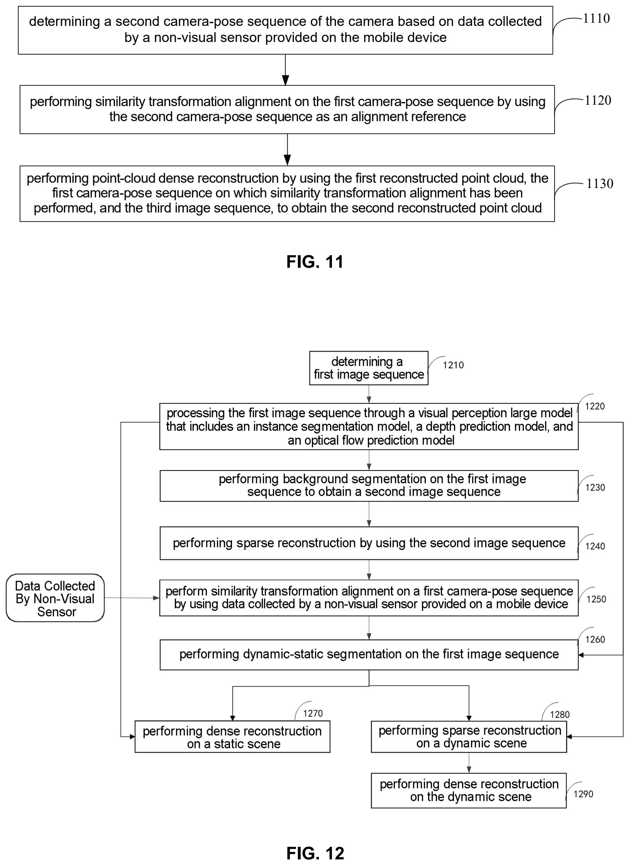

FIG. 11 is a schematic flowchart illustrating a dense reconstruction approach for a static scene according to still another exemplary embodiment of the present disclosure. The method shown in FIG. 11 includes step 1110, step 1120, and step 1130. Optionally, a combination of step 1110 to step 1130 may be used as another optional implementation of step 240.

Step 1110: Determining a second camera-pose sequence of the camera based on data collected by a non-visual sensor provided on the mobile device.

Optionally, the non-visual sensor includes, but is not limited to, a positioning sensor, an inertial measurement unit, a wheel speedometer, or the like. The positioning sensor includes, but is not limited to, a positioning sensor based on a global positioning system (GPS), a positioning sensor based on a global navigation satellite system (GNSS), or the like.

It should be noted that, for sensors included in the non-visual sensor and located in a chassis system of the mobile device, data collected by these sensors may be acquired from a controller area network (CAN) bus.

It is assumed that the non-visual sensor includes a positioning sensor and inertial measurement data. In this case, camera positions of the camera at the respective capture times of the N frames of captured images may be determined based on positioning data collected by the positioning sensor, and camera poses of the camera at the respective capture times of the N frames of captured images are determined based on inertial measurement data collected by the inertial measurement unit. Through integration of these camera positions and camera poses, a second camera-pose sequence may be obtained.

Step 1120: Performing similarity transformation alignment on the first camera-pose sequence by using the second camera-pose sequence as an alignment reference.

It should be noted that similarity transformation alignment may be performed on the first camera-pose sequence by using any implementable similarity transformation alignment algorithm.

Step 1130: Performing point-cloud dense reconstruction by using the first reconstructed point cloud, the first camera-pose sequence on which similarity transformation alignment has been performed, and the third image sequence, to obtain the second reconstructed point cloud.

It should be noted that, during use of an SFM algorithm to perform sparse reconstruction to obtain a first camera-pose sequence, each pose in the first camera-pose sequence is scale-undetermined, that is, has no real scale. Therefore, the data collected by the non-visual sensor may be used to determine a second camera-pose sequence with a real scale, and a similarity transformation alignment algorithm is used to align the first camera-pose sequence with the second camera pose, allowing the first camera-pose sequence on which the similarity transformation alignment has been performed to have a real scale. The use of the first camera-pose sequence, on which the similarity transformation alignment has been performed, for dense reconstruction of the static scene helps improve a dense reconstruction effect for the static scene.

In an optional example, step 1110 to step 1130 may be implemented by a processor calling corresponding instructions stored in a memory, or may be implemented by corresponding modules run by the processor.

In some optional implementations of the present disclosure, FIG. 12 is a schematic flowchart illustrating a scene reconstruction method according to another exemplary embodiment of the present disclosure. As shown in FIG. 12, a forward single-view video may be acquired through a front-view camera provided on the mobile device. On this basis, the procedure of the scene reconstruction method in this embodiment of the present disclosure may include the following steps:

Step 1210: Determining a first image sequence. That is, the first image sequence in the above description may be obtained based on the forward single-view video.

Step 1220: Processing the first image sequence through a visual perception large model that includes an instance segmentation model, a depth prediction model, and an optical flow prediction model, to obtain an instance segmentation result, a depth prediction result, and an optical flow prediction result.

Step 1230: Performing background segmentation on the first image sequence to obtain a second image sequence.

Step 1240: Performing sparse reconstruction by using the second image sequence to obtain a sparse reconstruction result of a static scene, the sparse reconstruction result of the static scene including a first reconstructed point cloud and a first camera-pose sequence.

Step 1250: Perform similarity transformation alignment on the first camera-pose sequence by using data collected by a non-visual sensor provided on the mobile device, to obtain a first camera-pose sequence on which similarity transformation alignment has been performed.

Step 1260: Performing dynamic-static segmentation on the first image sequence to obtain a third image sequence corresponding to the static scene and a fourth image sequence corresponding to a dynamic scene. For example, dynamic-static segmentation may be performed on the first image sequence based on the instance segmentation result, the optical flow prediction result, and the depth prediction result that are obtained in step 1220, to obtain a third image sequence corresponding to the static scene and a fourth image sequence corresponding to a dynamic scene. For details, refer to the related embodiment described above, such as step 3301, step 3303, step 3304, step 3305, and specific embodiments of the steps, such as step 33051a to step 33056a and step 33051b to step 33056b.

Step 1270: Performing dense reconstruction on the static scene. To be specific, dense reconstruction may be performed on the static scene based on the first camera-pose sequence on which similarity transformation alignment has been performed, the first reconstructed point cloud, and the third image sequence, to obtain a second reconstructed point cloud.

Step 1280: Performing sparse reconstruction on the dynamic scene. To be specific, sparse reconstruction may be first performed on the dynamic scene based on the fourth image sequence.

Step 1290: Performing dense reconstruction on the dynamic scene to finally obtain a scene reconstruction result corresponding to the first image sequence. To be specific, a scene reconstruction result corresponding to the first image sequence is obtained through a third reconstructed point cloud obtained by sequentially performing sparse reconstruction and dense reconstruction on the dynamic scene and the second reconstructed point cloud obtained in step 1270.

In summary, in this embodiment of the present disclosure, a visual way is used to implement scene reconstruction. Specifically, scene reconstruction may be performed separately from easy to difficult. For example, a static scene is reconstructed first, and then a dynamic scene is reconstructed after the reconstruction of the static scene is completed. This helps reduce reconstruction costs and complexity and can obtain a high-precision dense point cloud.

Any one of the scene reconstruction methods provided in the embodiments of the present disclosure may be performed by any suitable device with a data processing capability, including but not limited to: a terminal device, a server, and the like. Alternatively, any one of the scene reconstruction methods provided in the embodiments of the present disclosure may be performed by a processor. For example, the processor performs, by calling a corresponding instruction stored in a memory, any one of the scene reconstruction methods mentioned in the embodiments of the present disclosure. This is not repeated below.

A person of ordinary skill in the art may understand that all or some of the steps of the above method embodiments may be completed by hardware related to program instructions. The foregoing program may be stored in a computer readable storage medium. When the program is executed, the steps of the above method embodiments are executed. The foregoing storage media includes: a ROM, a RAM, a magnetic disk, an optical disc, or various other media capable of storing program code.

Exemplary Apparatus

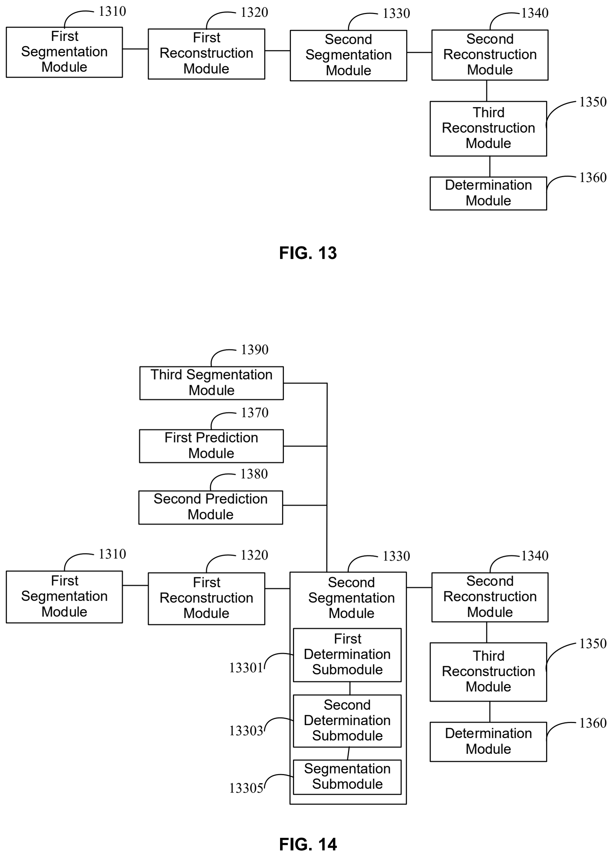

FIG. 13 is a schematic diagram illustrating a structure of a scene reconstruction apparatus according to an exemplary embodiment of the present disclosure. The apparatus shown in FIG. 12 includes a first segmentation module 1310, a first reconstruction module 1320, a second segmentation module 1330, a second reconstruction module 1340, a third reconstruction module 1350, and a determination module 1360.

The first segmentation module 1310 is configured for performing background segmentation on a first image sequence captured by a camera provided on a mobile device, to obtain a second image sequence.

The first reconstruction module 1320 is configured for performing point-cloud sparse reconstruction by using the second image sequence obtained by the first segmentation module 1310, to obtain a first reconstructed point cloud and a first camera-pose sequence.

The second segmentation module 1330 is configured for performing dynamic-static segmentation on the first image sequence to obtain a third image sequence corresponding to a static scene and a fourth image sequence corresponding to a dynamic scene.

The second reconstruction module 1340 is configured for performing point-cloud dense reconstruction by using the first reconstructed point cloud and the first camera-pose sequence that are obtained by the first reconstruction module 1320 and the third image sequence obtained by the second segmentation module 1330, to obtain a second reconstructed point cloud.

The third reconstruction module 1350 is configured for sequentially performing point-cloud sparse reconstruction and dense reconstruction by using the first camera-pose sequence obtained by the first reconstruction module 1320 and the fourth image sequence obtained by the second segmentation module 1330, to obtain a third reconstructed point cloud.

The determination module 1360 is configured for determining, based on the second reconstructed point cloud obtained by the second reconstruction module 1340 and the third reconstructed point cloud obtained by the third reconstruction module 1350, a scene reconstruction result corresponding to the first image sequence.

In some optional examples, as shown in FIG. 14, the apparatus provided in this embodiment of the present disclosure further includes:

a first prediction module 1370, configured for performing optical flow prediction on the first image sequence through an optical flow prediction model to obtain an optical flow prediction result; and

a second prediction module 1380, configured for performing depth prediction on the first image sequence through a depth prediction model to obtain a depth prediction result; and

the second segmentation module 1330 is specifically configured for performing dynamic-static segmentation on the first image sequence based on the optical flow prediction result obtained by the first prediction module 1370, the depth prediction result obtained by the second prediction module 1380, and the first camera-pose sequence obtained by the first reconstruction module 1320, to obtain the third image sequence corresponding to the static scene and the fourth image sequence corresponding to the dynamic scene.

In some optional examples, as shown in FIG. 14, the second segmentation module 1330 includes:

a first determination submodule 13301, configured for determining a first pixel position correspondence between adjacent frames of images in the first image sequence based on the optical flow prediction result obtained by the first prediction module 1370;

a second determination submodule 13303, configured for determining a second pixel-position correspondence between the adjacent frames of images in the first image sequence based on the depth prediction result obtained by the second prediction module 1380 and the first camera-pose sequence obtained by the first reconstruction module 1320; and

a segmentation submodule 13305, configured for performing dynamic-static segmentation on the first image sequence based on the first pixel-position correspondence determined by the first determination submodule 13301 and the second pixel-position correspondence determined by the second determination submodule 13303, to obtain the third image sequence corresponding to the static scene and the fourth image sequence corresponding to the dynamic scene.

In some optional examples, the segmentation submodule 13305 includes:

a first determination unit, configured for determining, for a first target pixel in a first target image in the first image sequence, based on the first pixel-position correspondence determined by the first determination submodule 13301, a first target pixel position corresponding to a pixel position of the first target pixel from a second target image, the second target image being a next frame of image for the first target image in the first image sequence;

a second determination unit, configured for determining, based on the second pixel correspondence determined by the second determination submodule 13303, a second target pixel position corresponding to the pixel position of the first target pixel from the second target image;

a third determination unit, configured for determining a pixel attribute of the first target pixel based on a position error between the first target pixel position determined by the first determination unit and the second target pixel position determined by the second determination unit, a pixel attribute of any pixel being used for representing whether the pixel belongs to a dynamic object;

a first segmentation unit, configured for performing dynamic-static segmentation on the first target image based on the pixel attribute of the first target pixel that is determined by the third determination unit, to obtain a first segmented image corresponding to the static scene and a second segmented image corresponding to the dynamic scene;

a fourth determination unit, configured for determining the third image sequence based on the first segmented image obtained by the first segmentation unit; and

a fifth determination unit, configured for determining the fourth image sequence based on the second segmented image obtained by the first segmentation unit.

In an optional example, as shown in FIG. 14, the apparatus provided in this embodiment of the present disclosure further includes:

a third segmentation module 1390, configured for performing instance segmentation on the first image sequence through an instance segmentation model to obtain an instance segmentation result; and

the segmentation submodule 13305 includes:

a fifth determination unit, configured for determining, for a first target image in the first image sequence, an instance area of each of instances in the first target image based on the instance segmentation result obtained by the third segmentation module 1390;

a sixth determination unit, configured for determining a pixel attribute of each of pixels in the first target image based on the first pixel-position correspondence determined by the first determination submodule 13301 and the second pixel-position correspondence determined by the second determination submodule 13303, a pixel attribute of any pixel being used for representing whether the pixel belongs to a dynamic object;

a statistics collecting unit, configured for collecting, for each of instance areas in the first target image, statistics on a pixel attribute of each of pixels in the instance area that is determined by the sixth determination unit, to obtain a statistical result;

a second segmentation unit, configured for performing dynamic-static segmentation on the first target image based on the statistical result corresponding to each of instance areas in the first target image that is obtained by the statistics collecting unit, to obtain a third segmented image corresponding to the static scene and a fourth segmented image corresponding to the dynamic scene;

a seventh determination unit, configured for determining the third image sequence based on the third segmented image obtained by the second segmentation unit; and

an eighth determination unit, configured for determining the fourth image sequence based on the fourth segmented image obtained by the second segmentation unit.

In some optional examples, the second segmentation unit includes:

a determination subunit, configured for determining, for each of instance areas in the first target image based on the statistical result corresponding to the instance area that is obtained by the statistics collecting unit, a proportion of pixels in the instance area that have pixel attributes for representing that the current pixels do not belong to the dynamic object; and

a segmentation subunit, configured for performing dynamic-static segmentation on the first target image based on the proportion corresponding to each of instance areas in the first target image that is determined by the determination subunit, to obtain the third segmented image corresponding to the static scene and the fourth segmented image corresponding to the dynamic scene.

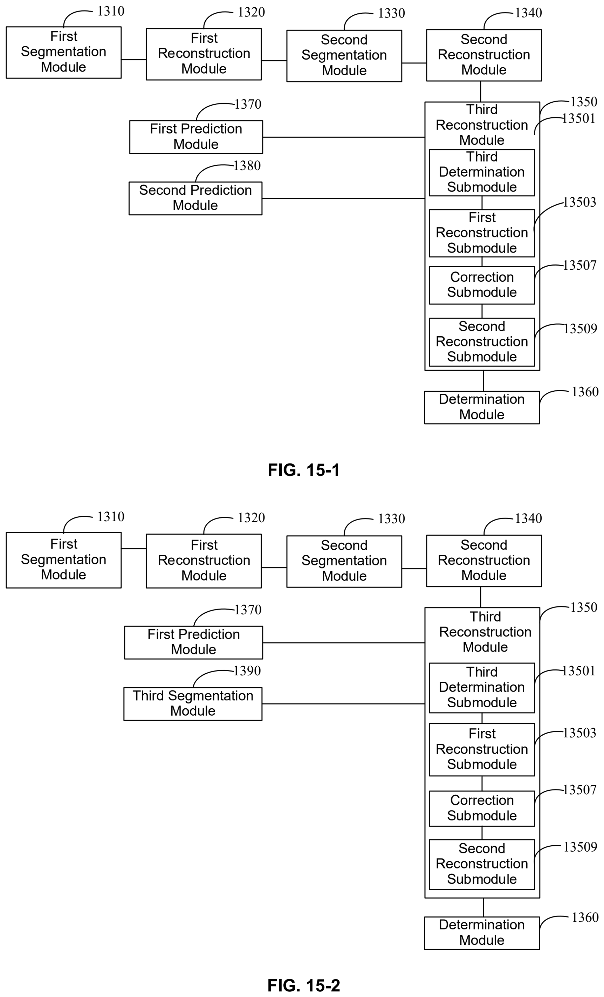

In some optional examples, as shown in FIG. 15-1 and FIG. 15-2, the apparatus provided in this embodiment of the present disclosure further includes:

a first prediction module 1370, configured for performing optical flow prediction on the first image sequence through an optical flow prediction model to obtain an optical flow prediction result; and

the third reconstruction module 1350 includes:

a third determination submodule 13501, configured for determining, based on the optical flow prediction result obtained by the first prediction module 1370, a third pixel-position correspondence between adjacent frames of images in the fourth image sequence obtained by the segmentation submodule 13305;

a first reconstruction submodule 13503, configured for performing point-cloud sparse reconstruction by using the first camera-pose sequence obtained by the first reconstruction module 1320, the fourth image sequence obtained by the second segmentation module 1330, and the third pixel-position correspondence determined by the third determination submodule 13501, to obtain a fourth reconstructed point cloud and an object pose sequence of a dynamic object in the fourth image sequence;

a correction submodule 13507, configured for performing correction, by a preset correction approach, on the object pose sequence obtained by the first reconstruction submodule 13503; and

a second reconstruction submodule 13509, configured for performing point-cloud dense reconstruction by using the first camera-pose sequence obtained by the first reconstruction module 1320, the fourth image sequence obtained by the second segmentation module 1330, the third pixel-position correspondence determined by the third determination submodule 13501, the fourth reconstructed point cloud obtained by the first reconstruction submodule 13503, and the corrected object pose sequence obtained by the correction submodule 13507, to obtain the third reconstructed point cloud.

In some optional examples, as shown in FIG. 15-1, the apparatus provided in this embodiment of the present disclosure further includes:

a second prediction module 1380, configured for performing depth prediction on the first image sequence through a depth prediction model to obtain a depth prediction result; and

the correction submodule 13507 includes:

a ninth determination unit, configured for determining, based on the depth prediction result obtained by the second prediction module 1380, the first camera-pose sequence obtained by the first reconstruction module 1320, and the object pose sequence obtained by the first reconstruction submodule 13503, a fourth pixel-position correspondence between the adjacent frames of images in the fourth image sequence obtained by the second segmentation module 1330;

a tenth determination unit, configured for determining a reprojection error based on the third pixel-position correspondence determined by the third determination submodule 13501 and the fourth pixel-position correspondence determined by the ninth determination unit; and

a first correction subunit, configured for performing correction, by minimizing the reprojection error determined by the tenth determination unit, on the object pose sequence obtained by the first reconstruction submodule 13503.

In some optional examples, as shown in FIG. 15-2, the apparatus provided in this embodiment of the present disclosure further includes:

a third segmentation module 1390, configured for performing instance segmentation on the first image sequence through an instance segmentation model to obtain an instance segmentation result; and

the correction submodule 13507 includes:

an eleventh determination unit, configured for determining, based on the object pose sequence obtained by the first reconstruction submodule 13503, a motion trajectory of the dynamic object in the fourth image sequence obtained by the second segmentation module 1330;

a twelfth determination unit, configured for determining, based on the instance segmentation result obtained by the third segmentation module 1390, a first predicted category of the dynamic object in the fourth image sequence obtained by the second segmentation module 1330;

a thirteenth determination unit, configured for determining a preset trajectory corresponding to the first predicted category determined by the twelfth determination unit; and

a second correction subunit, configured for performing correction, by minimizing a trajectory error between the motion trajectory determined by the eleventh determination unit and the preset trajectory determined by the thirteenth determination unit, on the object pose sequence obtained by the first reconstruction submodule 13503.

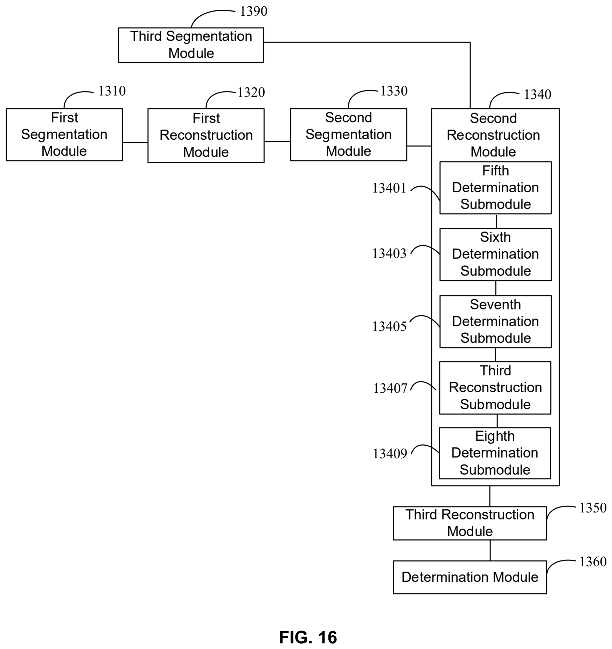

In some optional examples, as shown in FIG. 16, the apparatus provided in this embodiment of the present disclosure further includes:

a third segmentation module 1390, configured for performing instance segmentation on the first image sequence through an instance segmentation model to obtain an instance segmentation result;

the first reconstruction submodule 13503 includes:

a fourteenth determination unit, configured for determining, based on the instance segmentation result obtained by the third segmentation module 1390 and the third pixel-position correspondence determined by the third determination submodule 13501, whether predicted categories of corresponding pixel positions in the adjacent frames of images in the fourth image sequence obtained by the second segmentation module 1330 are consistent, to obtain a determination result;

a correction unit, configured for performing correction, based on the determination result obtained by the fourteenth determination unit, on the third pixel-position correspondence determined by the third determination submodule 13501; and

a reconstruction unit, configured for performing point-cloud sparse reconstruction by using the first camera-pose sequence obtained by the first reconstruction module 1320, the fourth image sequence obtained by the second segmentation module 1330, and the corrected third pixel-position correspondence obtained by the correction unit, to obtain the fourth reconstructed point cloud and the object pose sequence of the dynamic object in the fourth image sequence; and

the second reconstruction submodule 13509 is specifically configured for performing point-cloud dense reconstruction by using the first camera-pose sequence, the fourth image sequence, the corrected third pixel-position correspondence, the fourth reconstructed point cloud, and the corrected object pose sequence, to obtain the third reconstructed point cloud.

In some optional examples, as shown in FIG. 16, the apparatus provided in this embodiment of the present disclosure further includes:

a third segmentation module 1390, configured for performing instance segmentation on the first image sequence through an instance segmentation model to obtain an instance segmentation result; and

the second reconstruction module 1340 includes:

a fifth determination submodule 13401, configured for determining, for a second target pixel in a third target image in the third image sequence obtained by the second segmentation module 1330, a second predicted category of the second target pixel based on the instance segmentation result obtained by the third segmentation module 1390;

a sixth determination submodule 13403, configured for determining a local area size matching the second predicted category determined by the fifth determination submodule 13401;

a seventh determination submodule 13405, configured for determining a target local area from the third target image based on a pixel position of the second target pixel and the local area size determined by the sixth determination submodule 13403;

a third reconstruction submodule 13407, configured for performing, for the target local area determined by the seventh determination submodule 13405, point-cloud dense reconstruction by using the first reconstructed point cloud obtained by the first reconstruction module 1320, the first camera-pose sequence obtained by the first reconstruction module 1320, and an image in the third image sequence obtained by the second segmentation module 1330 other than the third target image, to obtain a local point cloud corresponding to the target local area; and

an eighth determination submodule 13409, configured for determining the second reconstructed point cloud based on the local point cloud obtained by the third reconstruction submodule 13407.

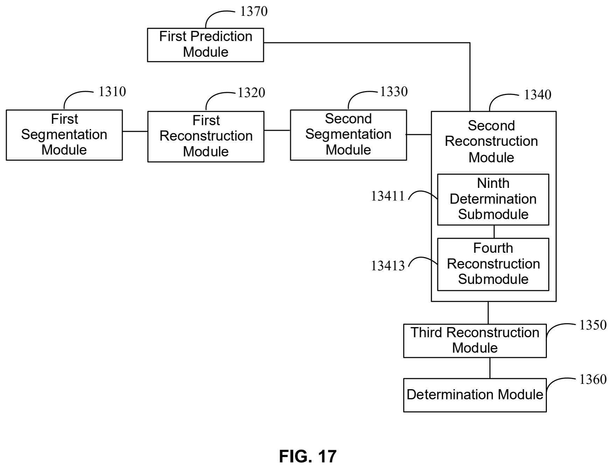

In some optional examples, as shown in FIG. 17, the apparatus provided in this embodiment of the present disclosure further includes:

a first prediction module 1370, configured for performing optical flow prediction on the first image sequence through an optical flow prediction model to obtain an optical flow prediction result; and

the second reconstruction module 1340 includes:

a ninth determination submodule 13411, configured for determining, based on the optical flow prediction result obtained by the first prediction module 1370, a fifth pixel-position correspondence between adjacent frames of images in the third image sequence obtained by the second segmentation module 1330; and

a fourth reconstruction submodule 13413, configured for performing point-cloud dense reconstruction by using the first reconstructed point cloud obtained by the first reconstruction module 1320, the first camera-pose sequence obtained by the first reconstruction module 1320, the third image sequence obtained by the second segmentation module 1330, and the fifth pixel-position correspondence determined by the ninth determination submodule 13411, to obtain the second reconstructed point cloud.

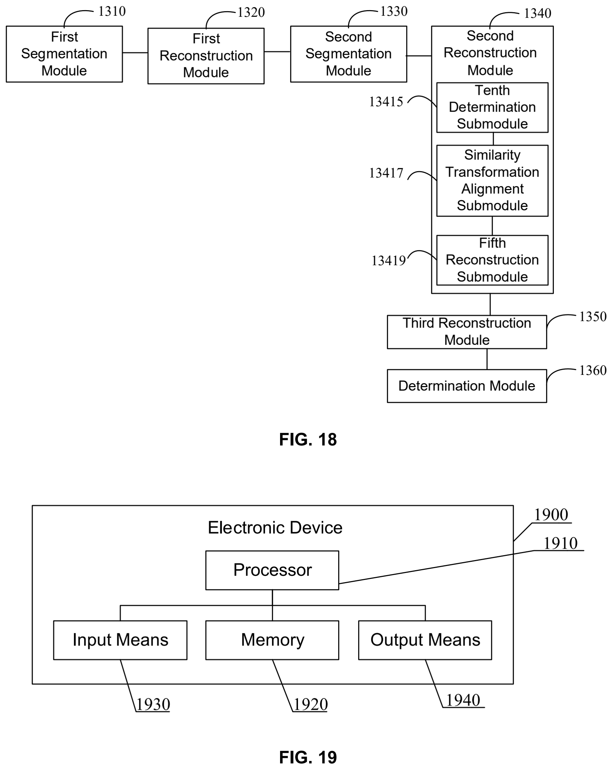

In some optional examples, as shown in FIG. 18, the second reconstruction module 1340 includes:

a tenth determination submodule 13415, configured for determining a second camera-pose sequence of the camera based on data collected by a non-visual sensor provided on the mobile device;

a similarity transformation alignment submodule 13417, configured for performing, by using the second camera-pose sequence determined by the tenth determination submodule 13415 as an alignment reference, similarity transformation alignment on the first camera-pose sequence obtained by the first reconstruction module 1320; and

a fifth reconstruction submodule 13419, configured for performing point-cloud dense reconstruction by using the first reconstructed point cloud obtained by the first reconstruction module 1320, the first camera-pose sequence on which similarity transformation alignment has been performed and that is obtained by the similarity transformation alignment submodule 13417, and the third image sequence obtained by the second segmentation module 1330, to obtain the second reconstructed point cloud.

In the apparatus of this embodiment of the present disclosure, the various optional embodiments, optional implementations, and optional examples disclosed above may all be flexibly selected and combined as required, to implement the corresponding functions and effects, which are not listed one by one in the present disclosure.

For beneficial technical effects corresponding to the exemplary embodiment of this apparatus, refer to the corresponding beneficial technical effects of the exemplary method section described above, which are not repeated herein.

Exemplary Electronic Device

FIG. 19 is a block diagram illustrating an electronic device according to an embodiment of the present disclosure. The electronic device 1900 includes one or more processors 1910 and a memory 1920.

The processor 1910 may be a central processing unit (CPU) or another form of processing unit having a data processing capability and/or an instruction execution capability, and may control another component in the electronic device 1900 to perform a desired function.

The memory 1920 may include one or more computer program products. The computer program product may include various forms of computer readable storage media, such as a volatile memory and/or a non-volatile memory. The volatile memory may include, for example, a RAM and/or a cache. The non-volatile memory may include, for example, a ROM, a hard disk, or a flash memory. The computer readable storage medium may store one or more computer program instructions. The processor 1910 may run the one or more computer program instructions to implement the method and/or other desired functions in the foregoing embodiments of the present disclosure.

In an example, the electronic device 1900 may further include an input means 1930 and an output means 1940. The components are interconnected through a bus system and/or other forms of connection mechanisms (not shown).

The input means 1930 may further include, for example, a keyboard or a mouse.

The output means 1940 may output various information to the outside, and may include, for example, a display, a loudspeaker, a printer, and a communication network and a remote output device connected thereto.

Certainly, for simplicity, only some components in the electronic device 1900 that are related to the present disclosure are shown in FIG. 19, and components such as a bus and an input/output interface are omitted. Besides, the electronic device 1900 may further include any other appropriate components depending on specific applications.

Exemplary Computer Program Product And Computer Readable Storage Medium

In addition to the foregoing method and device, the embodiments of the present disclosure may also provide a computer program product including computer program instructions that, when run by a processor, cause the processor to perform the steps of the scene reconstruction method according to the embodiments of the present disclosure that is described in the "exemplary method" section of this specification.

The computer program product may be program code, written with one or any combination of a plurality of programming languages, which is configured for performing the operations in the embodiments of the present disclosure. The programming languages include an object-oriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

In addition, the embodiments of the present disclosure may further relate to a computer readable storage medium, on which computer program instructions are stored. The computer program instructions, when run by a processor, cause the processor to implement the steps of the scene reconstruction method according to the embodiments of the present disclosure that is described in the "exemplary method" section of this specification.

The computer-readable storage medium may be any combination of one or more readable mediums. The readable medium may be a readable signal medium or a readable storage medium. The readable storage medium may include, for example, but is not limited to electrical, magnetic, optical, electromagnetic, infrared, or semiconductor systems, apparatuses, or devices, or any combination of the above. More specific examples (a non-exhaustive list) of the readable storage medium include: an electrical connection with one or more conducting wires, a portable disk, a hard disk, a RAM, a ROM, an erasable programmable ROM (an EPROM or a flash memory), an optical fiber, a portable compact disk ROM (CD-ROM), an optical storage device, a magnetic storage device, or any suitable combination of the above.

Basic principles of the present disclosure are described above in combination with specific embodiments. However, the advantages, superiorities, effects, and the like mentioned in the present disclosure are merely examples rather than limitations, and it should not be considered that these advantages, superiorities, effects, and the like are necessary for each of the embodiments of the present disclosure. Specific details disclosed above are merely for examples and for ease of understanding, rather than limitations. The details described above do not limit that the present disclosure must be implemented by using the foregoing specific details.

A person skilled in the art may make various modifications and variations to the present disclosure without departing from the spirit and scope of this application. The present disclosure is intended to cover these modifications and variations provided that they fall within the scope of protection defined by the claims of the present disclosure or equivalents thereof.

**Claims**

1. A scene reconstruction method, comprising:

   performing background segmentation on a first image sequence captured by a camera provided on a mobile device, to obtain a second image sequence;
   performing point-cloud sparse reconstruction by using the second image sequence, to obtain a first reconstructed point cloud and a first camera-pose sequence of the camera;
   performing dynamic-static segmentation on the first image sequence to obtain a third image sequence corresponding to a static scene and a fourth image sequence corresponding to a dynamic scene;
   performing point-cloud dense reconstruction by using the first reconstructed point cloud, the first camera-pose sequence, and the third image sequence, to obtain a second reconstructed point cloud;
   sequentially performing point-cloud sparse reconstruction and dense reconstruction by using the first camera-pose sequence and the fourth image sequence, to obtain a third reconstructed point cloud; and
   determining, based on the second reconstructed point cloud and the third reconstructed point cloud, a scene reconstruction result corresponding to the first image sequence.

2. The method according to claim 1, further comprising:

   performing optical flow prediction on the first image sequence through an optical flow prediction model to obtain an optical flow prediction result;
   performing depth prediction on the first image sequence through a depth prediction model to obtain a depth prediction result; and
   the performing dynamic-static segmentation on the first image sequence to obtain a third image sequence corresponding to a static scene and a fourth image sequence corresponding to a dynamic scene comprises:

      performing dynamic-static segmentation on the first image sequence based on the optical flow prediction result, the depth prediction result, and the first camera-pose sequence to obtain the third image sequence corresponding to the static scene and the fourth image sequence corresponding to the dynamic scene.

3. The method according to claim 2, wherein the performing dynamic-static segmentation on the first image sequence based on the optical flow prediction result, the depth prediction result, and the first camera-pose sequence to obtain the third image sequence corresponding to the static scene and the fourth image sequence corresponding to the dynamic scene comprises:

   determining a first pixel position correspondence between adjacent frames of images in the first image sequence based on the optical flow prediction result;
   determining a second pixel-position correspondence between the adjacent frames of images in the first image sequence based on the depth prediction result and the first camera-pose sequence; and
   performing dynamic-static segmentation on the first image sequence based on the first pixel-position correspondence and the second pixel-position correspondence to obtain the third image sequence corresponding to the static scene and the fourth image sequence corresponding to the dynamic scene.

4. The method according to claim 3, wherein the performing dynamic-static segmentation on the first image sequence based on the first pixel-position correspondence and the second pixel-position correspondence to obtain the third image sequence corresponding to the static scene and the fourth image sequence corresponding to the dynamic scene comprises:

   determining, for a first target pixel in a first target image in the first image sequence, based on the first pixel-position correspondence, a first target pixel position corresponding to a pixel position of the first target pixel from a second target image, the second target image being a next frame of image for the first target image in the first image sequence;
   determining, based on the second pixel correspondence, a second target pixel position corresponding to the pixel position of the first target pixel from the second target image;
   determining a pixel attribute of the first target pixel based on a position error between the first target pixel position and the second target pixel position, a pixel attribute of any pixel being used for representing whether the pixel belongs to a dynamic object;

performing dynamic-static segmentation on the first target image based on the pixel attribute of the first target pixel to obtain a first segmented image corresponding to the static scene and a second segmented image corresponding to the dynamic scene;

determining the third image sequence based on the first segmented image; and

determining the fourth image sequence based on the second segmented image.

5. The method according to claim 3, further comprising:

performing instance segmentation on the first image sequence through an instance segmentation model to obtain an instance segmentation result; and

the performing dynamic-static segmentation on the first image sequence based on the first pixel-position correspondence and the second pixel-position correspondence to obtain the third image sequence corresponding to the static scene and the fourth image sequence corresponding to the dynamic scene comprises:

determining, for a first target image in the first image sequence, an instance area of each of instances in the first target image based on the instance segmentation result;

determining a pixel attribute of each of pixels in the first target image based on the first pixel-position correspondence and the second pixel-position correspondence, a pixel attribute of any pixel being used for representing whether the pixel belongs to a dynamic object;

collecting, for each of instance areas in the first target image, statistics on a pixel attribute of each of pixels in the instance area to obtain a statistical result;

performing dynamic-static segmentation on the first target image based on the statistical result corresponding to each of instance areas in the first target image to obtain a third segmented image corresponding to the static scene and a fourth segmented image corresponding to the dynamic scene;

determining the third image sequence based on the third segmented image; and

determining the fourth image sequence based on the fourth segmented image.

6. The method according to claim 5, wherein the performing dynamic-static segmentation on the first target image based on the statistical result corresponding to each of instance areas in the first target image to obtain a third segmented image corresponding to the static scene and a fourth segmented image corresponding to the dynamic scene comprises:

determining, for each of instance areas in the first target image, based on the statistical result corresponding to the instance area, a proportion of pixels in the instance area that have pixel attributes for representing that the current pixels do not belong to the dynamic object; and

performing dynamic-static segmentation on the first target image based on the proportion corresponding to each of instance areas in the first target image to obtain the third segmented image corresponding to the static scene and the fourth segmented image corresponding to the dynamic scene.

7. The method according to claim 1, further comprising:

performing optical flow prediction on the first image sequence through an optical flow prediction model to obtain an optical flow prediction result; and

the sequentially performing point-cloud sparse reconstruction and dense reconstruction by using the first camera-pose sequence and the fourth image sequence, to obtain a third reconstructed point cloud comprises:

determining a third pixel-position correspondence between adjacent frames of images in the fourth image sequence based on the optical flow prediction result;

performing point-cloud sparse reconstruction by using the first camera-pose sequence, the fourth image sequence, and the third pixel-position correspondence, to obtain a fourth reconstructed point cloud and an object pose sequence of a dynamic object in the fourth image sequence;

performing correction on the object pose sequence by a preset correction approach; and

performing point-cloud dense reconstruction by using the first camera-pose sequence, the fourth image sequence, the third pixel-position correspondence, the fourth reconstructed point cloud, and the corrected object pose sequence, to obtain the third reconstructed point cloud.

8. The method according to claim 7, further comprising:

   performing depth prediction on the first image sequence through a depth prediction model to obtain a depth prediction result; and
   the performing correction on the object pose sequence by a preset correction approach comprises:

   determining a fourth pixel-position correspondence between the adjacent frames of images in the fourth image sequence based on the depth prediction result, the first camera-pose sequence, and the object pose sequence;
   determining a reprojection error based on the third pixel-position correspondence and the fourth pixel-position correspondence; and
   performing correction on the object pose sequence by minimizing the reprojection error.

9. The method according to claim 7, further comprising:

   performing instance segmentation on the first image sequence through an instance segmentation model to obtain an instance segmentation result; and
   the performing correction on the object pose sequence by a preset correction approach comprises:

   determining a motion trajectory of the dynamic object in the fourth image sequence based on the object pose sequence;
   determining a first predicted category of the dynamic object in the fourth image sequence based on the instance segmentation result;
   determining a preset trajectory corresponding to the first predicted category; and
   performing correction on the object pose sequence by minimizing a trajectory error between the motion trajectory and the preset trajectory.

10. The method according to claim 7, further comprising:

    performing instance segmentation on the first image sequence through an instance segmentation model to obtain an instance segmentation result;
    the performing point-cloud sparse reconstruction by using the first camera-pose sequence, the fourth image sequence, and the third pixel-position correspondence to obtain a fourth reconstructed point cloud and an object pose sequence of a dynamic object in the fourth image sequence comprises:

    determining, based on the instance segmentation result and the third pixel-position correspondence, whether predicted categories of corresponding pixel positions in the adjacent frames of images in the fourth image sequence are consistent, to obtain a determination result;
    performing correction on the third pixel-position correspondence based on the determination result; and
    performing point-cloud sparse reconstruction by using the first camera-pose sequence, the fourth image sequence, and the corrected third pixel-position correspondence, to obtain the fourth reconstructed point cloud and the object pose sequence of the dynamic object in the fourth image sequence; and
    the performing point-cloud dense reconstruction by using the first camera-pose sequence, the fourth image sequence, the third pixel-position correspondence, the fourth reconstructed point cloud, and the corrected object pose sequence, to obtain the third reconstructed point cloud comprises:
    performing point-cloud dense reconstruction by using the first camera-pose sequence, the fourth image sequence, the corrected third pixel-position correspondence, the fourth reconstructed point cloud, and the corrected object pose sequence, to obtain the third reconstructed point cloud.

11. The method according to claim 1, further comprising:

    performing instance segmentation on the first image sequence through an instance segmentation model to obtain an instance segmentation result;
    the performing point-cloud dense reconstruction by using the first reconstructed point cloud, the first camera-pose sequence, and the third image sequence, to obtain a second reconstructed point cloud comprises:

    determining, for a second target pixel in a third target image in the third image sequence, a second predicted category of the second target pixel based on the instance segmentation result;

determining a local area size matching the second predicted category;

determining a target local area from the third target image based on a pixel position of the second target pixel and the local area size;

performing, for the target local area, point-cloud dense reconstruction by using the first reconstructed point cloud, the first camera-pose sequence, and an image in the third image sequence other than the third target image, to obtain a local point cloud corresponding to the target local area; and

determining the second reconstructed point cloud based on the local point cloud.

12. A scene reconstruction apparatus, comprising:

a first segmentation module, configured for performing background segmentation on a first image sequence captured by a camera provided on a mobile device, to obtain a second image sequence;

a first reconstruction module, configured for performing point-cloud sparse reconstruction by using the second image sequence obtained by the first segmentation module, to obtain a first reconstructed point cloud and a first camera-pose sequence;

a second segmentation module, configured for performing dynamic-static segmentation on the first image sequence to obtain a third image sequence corresponding to a static scene and a fourth image sequence corresponding to a dynamic scene;

a second reconstruction module, configured for performing point-cloud dense reconstruction by using the first reconstructed point cloud and the first camera-pose sequence that are obtained by the first reconstruction module and the third image sequence obtained by the second segmentation module, to obtain a second reconstructed point cloud;

a third reconstruction module, configured for sequentially performing point-cloud sparse reconstruction and dense reconstruction by using the first camera-pose sequence obtained by the first reconstruction module and the fourth image sequence obtained by the second segmentation module, to obtain a third reconstructed point cloud; and

a determination module, configured for determining, based on the second reconstructed point cloud obtained by the second reconstruction module and the third reconstructed point cloud obtained by the third reconstruction module, a scene reconstruction result corresponding to the first image sequence.

13. A computer readable storage medium, on which a computer program is stored, wherein the computer program is used for performing the scene reconstruction method according to any one of claims 1 to 11.

14. An electronic device, comprising:

a processor; and

a memory, configured for storing instructions executable by the processor, wherein

the processor is configured for reading the executable instructions from the memory, and executing the instructions to implement the scene reconstruction method according to any one of claims 1 to 11.

**FIG. 1-1**

**FIG. 1-2**

| performing background segmentation on a first image sequence captured by a camera provided on a mobile device, to obtain a second image sequence | 210 |

| performing point-cloud sparse reconstruction by using the second image sequence, to obtain a first reconstructed point cloud and a first camera-pose sequence of the camera | 220 |

| performing dynamic-static segmentation on the first image sequence to obtain a third image sequence corresponding to a static scene and a fourth image sequence corresponding to a dynamic scene | 230 |

| performing point-cloud dense reconstruction by using the first reconstructed point cloud, the first camera-pose sequence, and the third image sequence, to obtain a second reconstructed point cloud | 240 |

| sequentially performing point-cloud sparse reconstruction and dense reconstruction by using the first camera-pose sequence and the fourth image sequence, to obtain a third reconstructed point cloud | 250 |

| determining, based on the second reconstructed point cloud and the third reconstructed point cloud, a scene reconstruction result corresponding to the first image sequence | 260 |

**FIG. 2**

| performing optical flow prediction on the first image sequence through an optical flow prediction model to obtain an optical flow prediction result | 310 |

| performing depth prediction on the first image sequence through a depth prediction model to obtain a depth prediction result | 320 |

| performing dynamic-static segmentation on the first image sequence based on the optical flow prediction result, the depth prediction result, and the first camera-pose sequence, to obtain the third image sequence corresponding to the static scene and the fourth image sequence corresponding to the dynamic scene | 330 |

**FIG. 3**

determining a first pixel position correspondence between adjacent frames of images in the first image sequence based on the optical flow prediction result ⌐3301

↓

determining a second pixel-position correspondence between the adjacent frames of images in the first image sequence based on the depth prediction result and the first camera-pose sequence ⌐3303

↓

performing dynamic-static segmentation on the first image sequence based on the first pixel-position correspondence and the second pixel-position correspondence, to obtain the third image sequence corresponding to the static scene and the fourth image sequence corresponding to the dynamic scene ⌐3305

**FIG. 4**

determining, for a first target pixel in a first target image in the first image sequence, based on the first pixel-position correspondence, a first target pixel position corresponding to a pixel position of the first target pixel from a second target image, the second target image being a next frame of image for the first target image in the first image sequence ⌐33051a

↓

determining, based on the second pixel correspondence, a second target pixel position corresponding to the pixel position of the first target pixel from the second target image ⌐33052a

↓

determining a pixel attribute of the first target pixel based on a position error between the first target pixel position and the second target pixel position, a pixel attribute of any pixel being used for representing whether the pixel belongs to a dynamic object ⌐33053a

↓

performing dynamic-static segmentation on the first target image based on the pixel attribute of the first target pixel to obtain a first segmented image corresponding to the static scene and a second segmented image corresponding to the dynamic scene ⌐33054a

↓

determining the third image sequence based on the first segmented image ⌐33055a

↓

determining the fourth image sequence based on the second segmented image ⌐33056a

**FIG. 5-1**

performing instance segmentation on the first image sequence through an instance segmentation model to obtain an instance segmentation result — 3304

↓

determining, for a first target image in the first image sequence, an instance area of each of instances in the first target image based on the instance segmentation result — 33051b

↓

determining a pixel attribute of each of pixels in the first target image based on the first pixel-position correspondence and the second pixel-position correspondence, a pixel attribute of any pixel being used for representing whether the pixel belongs to a dynamic object — 33052b

↓

collecting, for each of instance areas in the first target image, statistics on a pixel attribute of each of pixels in the instance area to obtain a statistical result — 33053b

↓

performing dynamic-static segmentation on the first target image based on the statistical result corresponding to each of instance areas in the first target image to obtain a third segmented image corresponding to the static scene and a fourth segmented image corresponding to the dynamic scene — 33054b

↓

determining the third image sequence based on the third segmented image — 33055b

↓

determining the fourth image sequence based on the fourth segmented image — 33056b

**FIG. 5-2**

performing optical flow prediction on the first image sequence through an optical flow prediction model to obtain an optical flow prediction result — 610

↓

determining a third pixel-position correspondence between adjacent frames of images in the fourth image sequence based on the optical flow prediction result — 620

↓

performing point-cloud sparse reconstruction by using the first camera-pose sequence, the fourth image sequence, and the third pixel-position correspondence, to obtain a fourth reconstructed point cloud and an object pose sequence of a dynamic object in the fourth image sequence — 630

↓

performing correction on the object pose sequence by a preset correction approach — 640

↓

performing point-cloud dense reconstruction by using the first camera-pose sequence, the fourth image sequence, the third pixel-position correspondence, the fourth reconstructed point cloud, and the corrected object pose sequence, to obtain the third reconstructed point cloud — 650

**FIG. 6**

performing depth prediction on the first image sequence through a depth prediction model to obtain a depth prediction result — 632

↓

determining a fourth pixel-position correspondence between the adjacent frames of images in the fourth image sequence based on the depth prediction result, the first camera-pose sequence, and the object pose sequence — 6401

↓

determining a reprojection error based on the third pixel-position correspondence and the fourth pixel-position correspondence — 6402

↓

performing correction on the object pose sequence by minimizing the reprojection error — 6403

**FIG. 7-1**

performing instance segmentation on the first image sequence through an instance segmentation model to obtain an instance segmentation result — 634

determining a motion trajectory of the dynamic object in the fourth image sequence based on the object pose sequence — 6404

determining a first predicted category of the dynamic object in the fourth image sequence based on the instance segmentation result — 6405

determining a preset trajectory corresponding to the first predicted category — 6406

performing correction on the object pose sequence by minimizing a trajectory error between the motion trajectory and the preset trajectory — 6407

**FIG. 7-2**

performing instance segmentation on the first image sequence through an instance segmentation model to obtain an instance segmentation result — 810

determining, based on the instance segmentation result and the third pixel-position correspondence, whether predicted categories of corresponding pixel positions in the adjacent frames of images in the fourth image sequence are consistent, to obtain a determination result — 820

performing correction on the third pixel-position correspondence based on the determination result — 830

performing point-cloud sparse reconstruction by using the first camera-pose sequence, the fourth image sequence, and the corrected third pixel-position correspondence, to obtain the fourth reconstructed point cloud and the object pose sequence of the dynamic object in the fourth image sequence — 840

performing point-cloud dense reconstruction by using the first camera-pose sequence, the fourth image sequence, the corrected third pixel-position correspondence, the fourth reconstructed point cloud, and the corrected object pose sequence, to obtain the third reconstructed point cloud — 850

**FIG. 8**

performing instance segmentation on the first image sequence through an instance segmentation model to obtain an instance segmentation result ⌐910

determining, for a second target pixel in a third target image in the third image sequence, a second predicted category of the second target pixel based on the instance segmentation result ⌐920

determining a local area size matching the second predicted category ⌐930

determining a target local area from the third target image based on a pixel position of the second target pixel and the local area size ⌐940

performing, for the target local area, point-cloud dense reconstruction by using the first reconstructed point cloud, the first camera-pose sequence, and an image in the third image sequence other than the third target image, to obtain a local point cloud corresponding to the target local area ⌐950

determining the second reconstructed point cloud based on the local point cloud ⌐960

**FIG. 9**

performing optical flow prediction on the first image sequence through an optical flow prediction model to obtain an optical flow prediction result ⌐1010

determining a fifth pixel-position correspondence between adjacent frames of images in the third image sequence based on the optical flow prediction result ⌐1020

performing point-cloud dense reconstruction by using the first reconstructed point cloud, the first camera-pose sequence, the third image sequence, and the fifth pixel-position correspondence, to obtain the second reconstructed point cloud ⌐1030

**FIG. 10**

determining a second camera-pose sequence of the camera based on data collected by a non-visual sensor provided on the mobile device — 1110

performing similarity transformation alignment on the first camera-pose sequence by using the second camera-pose sequence as an alignment reference — 1120

performing point-cloud dense reconstruction by using the first reconstructed point cloud, the first camera-pose sequence on which similarity transformation alignment has been performed, and the third image sequence, to obtain the second reconstructed point cloud — 1130

**FIG. 11**

determining a first image sequence — 1210

processing the first image sequence through a visual perception large model that includes an instance segmentation model, a depth prediction model, and an optical flow prediction model — 1220

performing background segmentation on the first image sequence to obtain a second image sequence — 1230

performing sparse reconstruction by using the second image sequence — 1240

Data Collected By Non-Visual Sensor

perform similarity transformation alignment on a first camera-pose sequence by using data collected by a non-visual sensor provided on a mobile device — 1250

performing dynamic-static segmentation on the first image sequence — 1260

performing dense reconstruction on a static scene — 1270

performing sparse reconstruction on a dynamic scene — 1280

performing dense reconstruction on the dynamic scene — 1290

**FIG. 12**

1310 First Segmentation Module — 1320 First Reconstruction Module — 1330 Second Segmentation Module — 1340 Second Reconstruction Module

1350 Third Reconstruction Module

1360 Determination Module

**FIG. 13**

1390 Third Segmentation Module

1370 First Prediction Module

1380 Second Prediction Module

1310 First Segmentation Module — 1320 First Reconstruction Module — 1330 Second Segmentation Module — 1340 Second Reconstruction Module

13301 First Determination Submodule

13303 Second Determination Submodule

13305 Segmentation Submodule

1350 Third Reconstruction Module

1360 Determination Module

**FIG. 14**

**FIG. 15-1**

**FIG. 15-2**

**FIG. 16**

**FIG. 17**

**FIG. 18**

**FIG. 19**

## INTERNATIONAL SEARCH REPORT

| International application No. |
| --- |
| **PCT/CN2024/101717** |

**A.    CLASSIFICATION OF SUBJECT MATTER**

G06T 17/00(2006.01)i

According to International Patent Classification (IPC) or to both national classification and IPC

**B.    FIELDS SEARCHED**

Minimum documentation searched (classification system followed by classification symbols)

IPC:G06T

Documentation searched other than minimum documentation to the extent that such documents are included in the fields searched

Electronic data base consulted during the international search (name of data base and, where practicable, search terms used)

CNABS; CNTXT; VEN; USTXT; EPTXT; WOTXT; CNKI; IEEE: 场景, 重建, 点云, 位姿, 动态, 静态, 稀疏, 稠密, scene, reconstruction, point cloud, pose, dynamic, static, sparse, dense

**C.    DOCUMENTS CONSIDERED TO BE RELEVANT**

| Category* | Citation of document, with indication, where appropriate, of the relevant passages | Relevant to claim No. |
| --- | --- | --- |
| PX | CN 116597096 A (BEIJING HORIZON INFORMATION TECHNOLOGY CO., LTD.) 15 August 2023 (2023-08-15)<br>claims 1-14 | 1-14 |
| A | CN 115578435 A (SOUTH CHINA UNIVERSITY OF TECHNOLOGY et al.) 06 January 2023 (2023-01-06)<br>description, paragraphs 5-59 | 1-14 |
| A | CN 107909643 A (TSINGHUA UNIVERSITY) 13 April 2018 (2018-04-13)<br>description, paragraphs 30-93 | 1-14 |
| A | CN 114926485 A (GUANGZHOU WERIDE TECHNOLOGY CO., LTD.) 19 August 2022 (2022-08-19)<br>entire document | 1-14 |
| A | US 2021383553 A1 (TOYOTA RESEARCH INSTITUTE, INC.) 09 December 2021 (2021-12-09)<br>entire document | 1-14 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **22 September 2024** | **28 September 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/101717**

| Patent document cited in search report | | | Publication date (day/month/year) | Patent family member(s) | | | Publication date (day/month/year) |
|---|---|---|---|---|---|---|---|
| CN | 116597096 | A | 15 August 2023 | None | | | |
| CN | 115578435 | A | 06 January 2023 | None | | | |
| CN | 107909643 | A | 13 April 2018 | CN | 107909643 | B | 24 April 2020 |
| CN | 114926485 | A | 19 August 2022 | CN | 114926485 | B | 18 June 2024 |
| US | 2021383553 | A1 | 09 December 2021 | US | 11551363 | B2 | 10 January 2023 |

Form PCT/ISA/210 (patent family annex) (July 2022)

**REFERENCES CITED IN THE DESCRIPTION**

**Patent documents cited in the description**

• CN 202310806421